# EUROPÄISCHE PATENTSCHRIFT

(11) **EP 2 201 609 B1**
(45) Veröffentlichungstag und Bekanntmachung des Hinweises auf die Patenterteilung: **09.11.2016**
(21) Anmeldenummer: 08802058.1
(22) Anmeldetag: 11.09.2008
(51) Int. Cl.: H02S 40/34, H01R 4/48

(54) **Anschlussdose, Solarpaneel mit dieser Anschlussdose und Verfahren zum Verbinden der Anschlussdose mit dem Solarpaneel**
Connection box, solar panel with such a connection box and method for connecting the connection box with the solar panel
Boîte de jonction, panneau solaire avec une telle boîte de jonction et procédé pour brancher la boîte de jonction avec le panneau solaire

(30) Priorität: 11.09.2007 DE 102007043178
(43) Veröffentlichungstag der Anmeldung: 30.06.2010
(73) Patentinhaber: Yamaichi Electronics Deutschland GmbH, 85609 Aschheim-Dornach (DE); YAMAICHI ELECTRONICS CO., LTD., Ota-ku, Tokyo 143-8515 (JP)
(72) Erfinder: QUITER, Michael, 85560 Ebersberg (DE)
(74) Vertreter: Müller-Boré & Partner Patentanwälte PartG mbB
(86) Internationale Anmeldenummer: PCT/EP2008/007498
(87) Internationale Veröffentlichungsnummer: WO 2009/033695

(56) Entgegenhaltungen:
- EP-A1- 1 777 720
- DE-U1- 9 422 155
- DE-U1- 20 311 184
- DE-U1-202005 008 385
- DE-U1-202005 018 884
- US-B1- 6 582 249

## Beschreibung

Die Erfindung betrifft eine Anschlußdose, ein Solarpaneel, eine Kontaktvorrichtung und ein Verfahren.

Herkömmliche Solarmodule zur Erzeugung elektrischer Energie aus Sonnenlicht umfassen eine oder mehrere einzelne Solarzellen. Je nach gewünschter vom Solarmodul zur Verfügung zu stellenden Spannung und/oder Stromstärke werden einzelne Solarzellen innerhalb des Moduls parallel und/oder in Reihe geschaltet und damit zu Solarzellengruppen zusammengefaßt. Die Solarzellengruppen werden zu einem flachen Solarmodul zusammengefaßt. Die elektrischen Anschlüsse der Solarzellengruppen des Solarmoduls werden nach außen geführt. Bei partieller Verringerung der Bestrahlungsintensität durch Sonnenlicht auf einzelne Solarzellen bzw. Solarzellengruppen, beispielsweise durch Verschmutzung oder Schattenwurf, können unter anderem folgende Effekte auftreten: (1) Eine (gleichmäßige) Verringerung der Bestrahlungsintensität innerhalb der zusammen geschalteten Solarzellengruppen führt zu einer Leistungsverminderung der jeweiligen Solarzellengruppe. (2) Durch eine partielle Abschattung einer Solarzelle innerhalb einer Solarzellengruppe wirkt diese abgeschattete Solarzelle als Sperrdiode bzw. Widerstand innerhalb des Stromkreises der Solarzellengruppe, was zum einen dazu führen kann, daß die gesamte Solarzellengruppe keine elektrische Energie mehr liefern kann und zum anderen zu einer Beschädigung der abgeschatteten Solarzelle und damit um dauerhaften Ausfall der Solarzellengruppe führen kann. In jedem Fall können zwischen den herausgeführten Anschlüssen der Solarzellengruppen eines Solarmoduls, je nach Bestrahlungsintensität auf die einzelnen Solarzelle, unterschiedliche Spannungen anliegen. Eine Reihenschaltung der Solarzellengruppen durch entsprechende Schaltung der nach außen geführten Anschlüsse führt analog zu den oben genannten Problemen.

Um die mit der unterschiedlichen Bestrahlungsintensität der Solarzellen verbundenen Probleme zu vermeiden, werden herkömmlich sogenannte Bypass-Dioden, verwendet, die elektrisch antiparallel zu den Solarzellengruppen geschaltet werden. Diese Bypass-Dioden haben die Wirkung, daß der Stromfluß durch das Solarmodul an Solarzellengruppen, welche eine nur geringe Leistung liefern, vorbei geleitet wird, d.h. die Anschlüsse dieser Solarzellengruppe eines Solarmoduls werden durch die Bypass-Diode kurz geschlossen und die entsprechende Solarzellengruppe dadurch überbrückt. Somit liefert eine solche Solarzellengruppe zwar keinen Anteil mehr zur Gesamtleistung des Solarmoduls, der Gesamtstromfluß durch das Solarpaneel ist jedoch im wesentlichen ungehindert und eine Beschädigung einzelner Solarzellen wird verhindert.

Solarpaneele, umfassen daher neben dem Solarmodul in der Regel eine elektrische Anschlußdose mit zumindest zwei Kontaktvorrichtungen und zumindest einer Bypass-Diode. Die Solarzellen in einem Solarmodul sind in der Regel durch flache dünne Leiterbänder miteinander verbunden. Diese Leiterbänder werden aus dem Solarmodul heraus geführt, und manuell mit einer in der Anschlußdose angeordneten elektrischen Anschlußaufnahme kontaktiert. Die Anschlußdose des Solarpaneels weist daher in der Regel auf der dem Solarmodul zugewandten Seite eine Öffnung auf, durch welche die Leiterbänder hindurch geführt, manuell umgebogen und beispielsweise an Anschlußklemmen angeschlossen werden. Die Anschlußdose wird herkömmlicherweise anschließend mit einem isolierenden Harz ausgegossen, um die Anschlußdose und die Leiterbänder fest miteinander zu verbinden und elektrisch voneinander zu isolieren. Das mit der Anschlußdose versehene Solarmodul wird als Solarpaneel bezeichnet. Eine beispielhafte Anschlußdose ist in der deutschen Patentanmeldung mit der Veröffentlichungsnummer DE 10 2005 025 976 beschrieben.

Die Druckschrift DE 20 2005 008 385 U1 offenbart eine elektrische Anschluß- und Verbindungsdose, mit einem Gehäuse und einer in dem Gehäuse vorgesehenen Klemme zum Anschluß eines elektrischen Leiters, wobei die Klemme geöffnet werden kann, indem auf eine vorbestimmte Stelle der Klemme eine Kraft ausgeübt wird, wobei in dem Gehäuse eine Vertiefung vorgesehen ist, die derart ausgebildet und angeordnet ist, daß bei Öffnung der Klemme mittels eines Schraubendrehers dieser in geöffnetem Zustand der Klemme mit seiner Spitze in die Vertiefung gelangt.

Die Druckschrift DE 20 2005 018 884 U1 offenbart eine Anschlussdose für ein Solarpaneel sowie ein Solarpaneel mit einer solchen Anschlussdose.

Die Druckschrift EP 1 777 720 A1 betrifft ein elektrisches Bauteil, insbesondere eine Relaisfassung, mit einem Gehäuse und wenigstens einem Anschlusspol zum Anschliessen von wenigstens einem Leiterende, wobei der Anschlusspol mit wenigstens einer Einstecköffnung, die sich in einer Einsteckrichtung des Leiterendes zu einer innerhalb des Gehäuses angeordneten Leiteraufnahmekammer erstreckt, und mit einer Klemmeinrichtung, durch die das Leiterende kraftschlüssig in der Leiteraufnahmekammer fixierbar ist, versehen ist.

Aufgrund des manuellen Anschließens ist die Montage zeit- und kostenintensiv. Es ist daher Aufgabe der Erfindung, eine elektrische Anschlußdose, ein Solarpaneel, eine Kontaktvorrichtung und ein Verfahren zum automatischen Verbinden der Anschlußdose bereitzustellen, welche eine einfache, zuverlässige und kostengünstige Montage ermöglichen.

Die Aufgaben werden durch die unabhängigen Ansprüche gelöst. Bevorzugte Ausführungsformen sind Gegenstand der abhängigen Ansprüche.

### Anschlußdose gemäß einem Aspekt

Ein Aspekt der vorliegenden Erfindung betrifft eine Anschlußdose für eine Leiterplatte, insbesondere für ein Solarmodul, umfassend:
- einen Grundträger mit zumindest einem Öffnungsbereich und
- zumindest eine Kontaktvorrichtung, wobei
   -- die zumindest eine Kontaktvorrichtung im Inneren des Grundträgers derart angeordnet ist, daß zumindest ein elektrischer Leiter entlang einer Einführrichtung durch den zumindest einen Öffnungsbereich in die Anschlußdose einführbar und mit der zumindest einen Kontaktvorrichtung in Kontakt bringbar ist, wobei
   -- die zumindest eine Kontaktvorrichtung zumindest ein Kontaktelement mit zumindest einer rückstellfähigen Anschlußkontaktfeder und zumindest einem Anschlußelement umfaßt und wobei
   -- die zumindest eine Anschlußkontaktfeder durch Anlegen einer Kraft parallel zu einer Kraftrichtung K relativ zu dem Anschlußelement derart rückstellfähig verlagerbar ist, daß der zumindest eine elektrische Leiter zumindest teilweise zwischen dem zumindest einen Anschlußelement und der zumindest einen Anschlußkontaktfeder anordenbar ist.

### Begriffsbestimmungen

Der Begriff "im Inneren", wie er in dieser Anmeldung verwendet wird, beschreibt insbesondere einen Volumenbereich, der beispielsweise von dem Gehäuse der Anschlußdose umgrenzt wird. In anderen Worten beschreibt der Begriff "im Inneren" das Innenvolumen der Anschlußdose. Hierbei ist es nicht notwendig, daß die Anschlußdose geschlossen ist. Beispielsweise kann die Anschlußdose einen Deckel aufweisen und der Deckel nicht an der Anschlußdose angeordnet sei. Trotzdem beschreibt der Begriff "im Inneren" das Innenvolumen, als ob der Deckel angeordnet wäre. In anderen Worten beschreibt der Begriff "im Inneren" das Innenvolumen einer idealerweise vollständig geschlossenen Anschlußdose. Die Kontaktvorrichtung kann auch derart angeordnet sein, daß ein Teil der Kontaktvorrichtung durch eine entsprechende Öffnung aus der Anschlußdose heraus ragt bzw. heraus geführt ist. Solange jedoch ein Teil bzw. Bereich der Kontaktvorrichtung, insbesondere derjenige Bereich, in bzw. an dem der elektrische Leiter anordenbar ist, innerhalb des Innenvolumens der Anschlußdose angeordnet ist, befindet sich dieser Bereich "im Inneren" der Anschlußdose. Der Begriff "im Inneren" beinhaltet somit sinngemäß z.β. auch "im wesentlichen im Inneren" bzw. auch "zumindest teilweise im Inneren".

Der Begriff "Kraftrichtung" im Sinne dieser Erfindung beschreibt, eine Richtung, entlang welcher eine Kraft angelegt werden kann. Beispielsweise kann die Kraftrichtung K im wesentlichen senkrecht zu einer Bodenfläche bzw. dem Grundträger der Anschlußdose sein. Die Bodenfläche ist beispielsweise die Fläche, welche die Öffnungsbereiche enthält und/oder an bzw. auf der die Kontaktvorrichtung(en) angeordnet ist/sind. Beispielsweise kann die Kraftrichtung K im wesentlichen senkrecht zu einer Fläche bzw. Oberfläche der Leiterplatte sein, an bzw. auf der die Anschlußdose angeordnet ist. Es ist auch möglich, daß die Kraftrichtung K mit der Bezugsebene, beispielsweise dem Boden der Anschlußdose und/oder der Oberfläche der Leiterplatte einen Winkel zwischen etwa 85° und etwa 60° einschließt, insbesondere einen Winkel zwischen etwa 80° und etwa 65°, insbesondere einen Winkel zwischen etwa 75° und etwa 70° einschließt. Besonders bevorzugt ist die Kraftrichtung K derart ausgerichtet, daß beim Anlegen einer Kraft die Anschlußkontaktfeder relativ zu dem Anschlußelement verlagerbar ist bzw. verlagert wird. Die Kraftrichtung K weist beispielsweise von der Anschlußdose auf die Leiterplatte hin. Eine Richtung antiparallel zu der Kraftrichtung K weist beispielsweise von der Leiterplatte auf die Anschlußdose hin.

Die "Einführrichtung" im Sinne der vorliegenden Erfindung ist beispielsweise eine Richtung, in der ein oder mehrere elektrische Leiter in die Anschlußdose eingeführt werden bzw. einführbar sind. Beispielsweise kann die Einführrichtung parallel zu einer Längsachse eines bzw. aller elektrische Leiter sein. Die Einführrichtung kann auch senkrecht zu der Fläche bzw. Oberfläche der Leiterplatte sein. Die Einführrichtung kann auch senkrecht zu dem Grundträger sein. Insbesondere kann die Einführrichtung senkrecht zu dem Boden der Anschlußdose sein. Die Einführrichtung kann beispielsweise von der Leiterplatte zu der Anschlußdose hin gerichtet sein. Insbesondere kann die Einführrichtung durch die Längserstreckung eines oder mehrerer elektrischer Leiter bestimmt werden, die sich im wesentlichen senkrecht zur Fläche bzw. Oberfläche der Leiterplatte erstrecken, wobei die Einführrichtung im wesentlichen senkrecht zum Grundträger und von dem Öffnungsbereich des Grundträgers in das Innere der Anschlußdose gerichtet ist. Durch das Einführen des zumindest einen elektrischen Leiters ist der zumindest eine elektrische Leiter mit der zumindest einen Kontaktvorrichtung in Kontakt bringbar, d.h. eine Biegung bzw. ein Umbiegen des elektrischen Leiters ist vorteilhafterweise nicht erforderlich.

Der Begriff "Ruheposition", wie er im Sinne der vorliegenden Erfindung verwendet wird, beschreibt beispielsweise den Zustand bzw. die Position eines oder mehrerer elektrischer Bauteile insbesondere der Kontaktvorrichtung bzw. von Bestandteilen der Kontaktvorrichtung. Die Kontaktvorrichtung kann beispielsweise eine oder mehrere Aufnahmen aufweisen, in welche externe elektrische Leiter, beispielsweise ein elektrischer Leiter der Leiterplatte und/oder ein elektrischer Leiter einer Diode einführbar ist. In der Ruheposition der entsprechenden Aufnahme oder des Bauteils, das diese Aufnahme umfaßt, ist beispielsweise der entsprechende externe elektrische Leiter nicht in die Aufnahme eingeführt bzw. kontaktiert diese Aufnahme nicht elektrisch und/oder mechanisch. Der Begriff "Ruheposition", wie er im Sinne der vorliegenden Erfindung verwendet wird, beschreibt insbesondere diejenige Position beispielsweise der Anschlußkontaktfeder, in der sich die Anschlußkontaktfeder befindet, wenn die Anschlußdose nicht mit der Leiterplatte verbunden ist. In anderen Worten ist in der Ruheposition der Anschlußkontaktfeder die Anschlußdose beispielsweise nicht an bzw. auf der Leiterplatte montiert. Zumindest sind in der Ruheposition die elektrischen Leiter noch nicht in den bzw. die Einführbereich(e) eingeführt. Zusätzlich kann in der Ruheposition ein elektrischer und/oder mechanischer Kontakt zwischen der Anschlußkontaktfeder und dem Anschlußelement vorliegen. In anderen Worten entspricht die Ruheposition der Anschlußkontaktfeder derjenigen Position in der sich die Anschlußkontaktfeder befindet, wenn keinerlei externe Kraft, insbesondere keine Kraft in Kraftrichtung K an die Anschlußkontaktfeder angelegt ist. Weiterhin ist es nicht notwendig, daß in der Ruheposition die Anschlußkontaktfeder das Anschlußelement kontaktiert. Die Ruheposition ist in diesem Fall die Position, welche die Anschlußkontaktfeder ohne angelegte Kraft, im wesentlichen im entspannten Zustand, einnimmt.

Der Begriff "Betätigungsposition", wie er im Sinne der vorliegenden Erfindung verwendet wird, beschreibt beispielsweise den Zustand bzw. die Position der vorgenannten elektrischen Bauteile, insbesondere der Kontaktvorrichtung bzw. von Bestandteilen der Kontaktvorrichtung, wie beispielsweise der vorgenannten einen oder mehreren Aufnahmen. Im Gegensatz zu der Ruheposition wird in der Betätigungsposition eine Kraft auf einen oder mehrere Bestandteile der elektrischen Bauteile ausgeübt. Insbesondere wird in der Betätigungsposition ermöglicht, daß ein oder mehrere elektrische Leiter in die Aufnahme(n) einführbar sind bzw. eingeführt sind. Der Begriff "Betätigungsposition", wie er im Sinne der vorliegenden Erfindung verwendet wird, beschreibt somit insbesondere eine Position gemäß der die Anschlußkontaktfeder und das Anschlußelement voneinander beabstandet sind. Beispielsweise kann die Betätigungsposition durch Anlegen einer Kraft in Kraftrichtung K an der Anschlußkontaktfeder erreicht werden. Aufgrund der angelegten Kraft bewegt sich die Anschlußkontaktfeder beispielsweise von der Ruheposition in die Bestätigungsposition. Hierbei kann sowohl ein mechanischer und/oder ein elektrischer Kontakt, insbesondere ein direkter mechanischer und/oder elektrischer Kontakt zwischen der Anschlußkontaktfeder und dem Anschlußelement getrennt werden. Beispielsweise kann jedoch auch der Leiter zwischen der Anschlußkontaktfeder und dem Anschlußelement angeordnet sein und die Kraft entlang der Kraftrichtung K wird nicht länger angelegt. Die Anschlußkontaktfeder drückt aufgrund der Federkraft den Leiter gegen das Anschlußelement. Auch in diesem Fall befindet sich die Anschlußkontaktfeder in der Betätigungsposition, kontaktiert das Anschlußelement jedoch nur mittelbar bzw. indirekt über den elektrischen Leiter.

Der Begriff "Kontakt" im Sinne der vorliegenden Erfindung beinhaltet insbesondere elektrischen und/oder mechanischen Kontakt.

Der Begriff "derart angeordnet, daß" beinhaltet, beispielsweise in Bezug auf ein Bauteil 1 und ein Bauteil 2 angewandt, daß das Bauteil 1 an dem anderen Bauteil 2 angeordnet ist, so daß das Bauteil 1 und/oder das Bauteil 2 einen vorgegebenen Zweck erfüllt/erfüllen bzw. ein vorgegebenes Verfahren durchführt/durchführen. Dies kann insbesondere beinhalten, daß das Bauteil 1 und/oder das Bauteil 2 ausschließlich diesen Zweck erfüllt/erfüllen bzw. dieses Verfahren durchführt/durchführen. Somit beinhaltet der Begriff "derart angeordnet, daß", daß das System aus Bauteil 1 und Bauteil 2 strukturell bzw. gegenständlich angepaßt ist. In anderen Worten kann das System, bei dem das Bauteil 1 derart an Bauteil 2 angeordnet ist, daß ein bestimmter Zweck erfüllt wird bzw. ein bestimmtes Verfahren durchgeführt wird, von einem System unterschieden werden, bei dem das Bauteil 1 nicht derart an dem Bauteil 2 angeordnet ist. Ebenso beinhaltet der Begriff "derart ausgebildet, daß" in Bezug auf ein Bauteil 1, daß das Bauteil 1 einen vorgegeben Zweck erfüllt bzw. ein bestimmtes Verfahren durchführt. Dies kann beinhalten, daß das Bauteil 1 strukturell speziell für diesen Zweck ausgestaltet ist und/oder speziell angeordnet ist. In anderen Worten kann ein Bauteil 1, das "derart ausgebildet ist, daß" ein bestimmter Zweck erfüllt wird bzw. ein bestimmtes Verfahren durchgeführt wird, strukturell bzw. gegenständlich von einem Bauteil unterschieden werden, das nicht derart ausgebildet ist.

### Bevorzugte Ausführungsformen der Anschlußdose

Vorzugsweise ist die Kontaktvorrichtung derart ausgelegt, daß die Kraft durch ein Hilfsmittel an der Anschlußkontaktfeder anlegbar ist. Insbesondere ist die Anschlußkontaktfeder in der Kontaktvorrichtung derart angeordnet, daß die Anschlußkontaktfeder zumindest bereichsweise von außerhalb der Kontaktvorrichtung zugänglich ist, um ein Hilfsmittel zumindest bereichsweise in die Kontaktvorrichtung einzuführen, welches die Anschlußkontaktfeder mechanisch kontaktieren kann, um eine Kraft daran anzulegen.

Weiterhin vorzugsweise ist die zumindest eine Anschlußkontaktfeder derart rückstellfähig ausgebildet, daß bei Fehlen der angelegten Kraft die zumindest eine Anschlußkontaktfeder den zwischen Anschlußkontaktfeder und Anschlußelement angeordneten elektrischen Leiter fixiert und mit der Kontaktvorrichtung elektrisch leitend verbindet.

Das heißt, daß. die Anschlußkontaktfeder eine hinreichend hohe Federkonstante bzw. einen hinreichend hohen Elastizitätsmodul ausweist, um aufgrund der geometrischen Auslenkung durch den zwischen Anschlußkontaktfeder und Anschlußelement angeordneten elektrischen Leiter eine Reaktionskraft aufzubringen, welche den elektrischen Leiter fixiert.

In anderen Worten ist es vorteilhafterweise möglich, die Anschlußdose in einfacher Weise mit der Leiterplatte zu verbinden, wobei insbesondere eine automatische Anordnung der Anschlußdose an bzw. auf der Leiterplatte möglich ist. Hierbei wird dadurch, daß die Anschlußkontaktfeder beispielsweise durch das Hilfsmittel von dem Anschlußelement beabstandbar ist, erreicht, daß ein Zwischenraum, nachfolgend auch Einführbereich genannt, in der Kontaktvorrichtung, insbesondere in einem Kontaktbereich der Kontaktvorrichtung erzeugt wird. In diesen Zwischenraum bzw. Einführbereich kann zumindest ein elektrischer Leiter eingeführt werden bzw. einführbar sein. Da ein Zwischenraum bereitgestellt wird, ist es vorteilhafterweise gerade nicht notwendig, daß der Leiter Kraft aufwendet bzw. anhand des Leiters Kraft aufgewendet, um den Leiter in die Kontaktvorrichtung und insbesondere in den Kontaktbereich der Kontaktvorrichtung einzuführen. Vielmehr ist der Leiter im wesentlichen kraftfrei bzw. Kraftlos in die Kontaktvorrichtung einführbar. Der Begriff "kraftfrei", wie er im Sinne der vorliegenden Erfindung verwendet wird beschreibt, daß keine Kraft oder eine Kraft etwa 1/2 der Kraft entlang der Kraftrichtung K oder eine Kraft etwa 1/4, 1/8, 1/10, 1/100, 1/1000 der Kraft entlang der Kraftrichtung K an dem zumindest einen elektrischen Leiter anliegt bzw. damit aufgebracht wird.

Weiterhin vorteilhafterweise ist aufgrund der rückstellfähigen Anschlußkontaktfeder der elektrische Leiter in der Kontaktvorrichtung fixiert. Folglich wird ein zeit- und kostenaufwendiges Ausgießen der Anschlußdose beispielsweise mit einem Kunstharz vermieden. Weiterhin können zwei oder mehr elektrische Leiter in der Anschlußdose angeordnet sein. Insbesondere können auch zwei Kontaktvorrichtungen oder mehrere, beispielsweise vier, sechs, acht, zehn, zwölf usw. Kontaktvorrichtungen in der Anschlußdose angeordnet sein. Werden elektrische Leiter mit den jeweiligen Kontaktvorrichtungen verbunden und insbesondere anhand der jeweiligen Anschlußkontaktfedern und Anschlußelemente in den Kontaktvorrichtungen fixiert, so ist es vorteilhafterweise nicht notwendig, die elektrischen Leiter zusätzlich, beispielsweise durch Ausgießen mit einem Kunstharz, elektrisch voneinander zu isolieren. Somit ist die Anschlußdose in einfacher und sicherer Weise, insbesondere automatisch an bzw. auf der Leiterplatte montierbar.

Vorzugsweise ist jeder Kontakteinrichtung ein Öffnungsbereich zugeordnet und jede Kontaktvorrichtung umfängt den zugeordneten Öffnungsbereich.

Weiterhin vorzugsweise umfaßt die Anschlußdose vier Kontaktvorrichtungen und vier Öffnungsbereiche, wobei jeder Kontaktvorrichtung ein Öffnungsbereich zugeordnet ist und jede Kontaktvorrichtung den zugeordneten Öffnungsbereich umfängt.

In anderen Worten kann der Grundträger vier oder mehr Öffnungen, insbesondere sechs, acht, zehn, zwölf usw. Öffnungen aufweisen. Die Öffnungen können beispielsweise in Draufsicht rechteckig sein. Im dreidimensionalen Raum können die Öffnungsbereiche beispielsweise auch quaderförmig sein. Alternativ können die Öffnungen bzw. die Öffnungsbereiche in Draufsicht auch kreisförmig oder oval sein. Es ist insbesondere möglich, daß verschiedene Öffnungsbereiche verschieden Formen aufweisen. Jede Kontakteinrichtung umfängt vorzugsweise genau einen Öffnungsbereich bzw. genau eine Öffnung. Insbesondere umfängt vorzugsweise jedes Kontaktelement und/oder jeder Kontaktbereich einer jeden Kontakteinrichtung genau einen Öffnungsbereich. Alternativ oder zusätzlich kann auch eine Kontakteinrichtung, insbesondere ein Kontaktelement und/oder ein Kontaktbereich auch mehrere Öffnungsbereich bzw. Öffnungen umfangen. Alternativ oder zusätzlich können auch mehrere Kontaktvorrichtungen bzw. mehrere Kontaktelemente und/oder mehrere Kontaktbereiche (einer oder mehrerer Kontaktvorrichtungen) genau einen Öffnungsbereich gemeinsam umfangen. Hierbei ist auch möglich, daß der Öffnungsbereich lediglich teilweise umfangen wird.

Jeder Kontaktbereich und/oder jedes Kontaktelement einer Kontakteinrichtung kann auch mehrere Anschlußkontaktfedern und/oder Anschlußelemente aufweisen. Beispielsweise kann das Kontaktelement zwei, drei, vier, usw. Anschlußkontaktfedern und/oder zwei, drei, vier, usw. Anschlußelemente aufweisen. Ferner können die zumindest eine Anschlußkontaktfeder und das zumindest eine Kontaktelement eines jeden Kontaktelements relativ zueinander verlagerbar sein. In anderen Worten kann/können beispielsweise eine oder mehrere Anschlußelemente rückstellfähig ausgebildet sein. Die Kraft in Kraftrichtung K kann beispielsweise an die zumindest eine Anschlußkontaktfeder und/oder an das zumindest eine Anschlußelement angelegt werden bzw. anlegbar sein. Insbesondere kann sich die Anschlußkontaktfeder bei festgelegtem Anschlußelement von dem Anschlußelement weg bewegen oder das Anschlußelement bei festgelegter Anschlußkontaktfeder von der Anschlußkontaktfeder weg bewegen oder weder die Anschlußkontaktfeder noch das Anschlußelement festgelegt sein und sich die Anschlußkontaktfeder und das Anschlußelement durch eine beiderseitige Bewegung voneinander weg bewegen.

Weiterhin vorzugsweise kontaktiert in einer Ruheposition die zumindest eine Anschlußkontaktfeder das zumindest eine Anschlußelement zumindest teilweise mechanisch.

Weiterhin vorzugsweise ist bei angelegter Kraft entlang der Kraftrichtung K die zumindest eine Anschlußkontaktfeder von dem zumindest einen Anschlußelement beabstandet, derart daß ein Einführbereich zwischen der zumindest einen Anschlußkontaktfeder und dem zumindest einen Anschlußelement gebildet ist.

Weiterhin vorzugsweise ist der Einführbereich über dem zumindest einen Öffnungsbereich angeordnet ist.

Besonders bevorzugt ist ein jeder Einführbereich über einem Öffnungsbereich angeordnet. Der Einführbereich ist vorzugsweise ausgebildet, um zumindest einen Leiter aufzunehmen.

Vorzugsweise ist die zumindest eine Kontaktvorrichtung derart relativ zu dem zumindest einen Öffnungsbereich angeordnet ist, daß die Kraftrichtung K und die Einführrichtung entgegengesetzt sind.

In anderen Worten sind die Kraftrichtung K und die Einführrichtung vorzugsweise antiparallel.

Bevorzugt ist der Einführbereich derart ausgebildet ist, daß der zumindest eine elektrische Leiter im wesentlichen kraftfrei durch den Öffnungsbereich in den Einführbereich einführbar ist.

Besonders bevorzugt ist die Anschlußkontaktfeder eine Blattfeder.

Weiterhin vorzugsweise weist die Anschlußkontaktfeder einen Befestigungsbereich auf, mit dem die Anschlußkontaktfeder an der Kontaktvorrichtung befestigt ist, und weist
die Anschlußkontaktfeder einen relativ zu dem Befestigungsbereich proximalen Bereich und einen relativ zu dem Befestigungsbereich distalen Bereich auf, wobei
der proximale Bereich derart ausgebildet ist, daß bei Anlegen einer Kraft parallel zu der Kraftrichtung K an dem proximalen Bereich die Anschlußkontaktfeder das Anschlußelement dekontaktiert und beim Anlegen einer Kraft antiparallel zu der Kraftrichtung K an dem distalen Bereich die Anschlußkontaktfeder das Anschlußelement kontaktiert.

Der Kontakt kann hierbei mechanisch und/oder elektrisch sein.

Vorzugsweise weist die Anschlußkontaktfeder in dem proximalen Bereich eine Biegung von etwa 0° bis etwa 180° bevorzugt von etwa 10° bis etwa 170°, besonders bevorzugt von etwa 20° bis etwa 160° auf.

Weiterhin vorzugsweise ist das Kontaktelement einstückig ausgebildet. Insbesondere kann das Kontaktelement im wesentlichen einen identischen Querschnitt aufweisen, wie der Öffnungsbereich, der von dem Kontaktelement umfangen wird. Das Kontaktelement kann beispielsweise aus einem Metall oder einer Metalllegierung ausgebildet sein

In anderen Worten kann die vorliegende Erfindung eine Anschlußdose für Module, insbesondere für Solarmodule, betreffen, vorzugsweise umfassend: einen Grundträger, zumindest eine Kontaktvorrichtung, welche in einer Anordnungsposition in einem oberen, d.h. dem Inneren der Anschlußdose zugewandten Bereich des Grundträgers angebracht ist, und zumindest einem Außenanschlußbereich, wobei der Grundträger zumindest einen Öffnungsbereich zur Durchführung von elektrischen Leitungen durch den Grundträger aufweist, jede Kontaktvorrichtung ein Kontaktelement, weiter vorzugsweise umfassend einen Kurzschlußbereich und einen Anschlußbereich, ein Kontaktelementgehäuse und eine Anschlußkontaktfeder aufweist, wobei die Anschlußkontaktfeder in Ruheposition den Anschlußbereich, insbesondere das Anschlußelement des Kontaktelementes vorzugsweise vollständig kontaktiert, die Anschlußkontaktfeder in Betätigungsposition den Anschlußbereich des Kontaktelementes, insbesondere das Anschlußelement des Kontaktelements zumindest bereichsweise nicht kontaktiert, so daß zwischen Anschlußkontaktfeder und dem Kontaktelement ein Einführbereich angeordnet bzw. definiert ist und die Anschlußkontaktfeder durch eine von oben auf die Anschlußkontaktfeder wirkende Kraft von der Ruhe- in die Betätigungsposition überführbar ist, und wobei der Einführbereich zumindest bereichsweise oberhalb eines Öffnungsbereiches des Grundträgers angeordnet ist, so daß eine im Öffnungsbereich durch den Grundträger durchgeführte elektrische Leitung bei einer in Betätigungsposition befindlichen Anschlußkontaktfeder im wesentlichen ohne Aufbringen einer Einführkraft in den Einführbereich zwischen Anschlußbereich, insbesondere Anschlußelement und Anschlußkontaktfeder anordenbar ist.

Vorzugsweise weist die Anschlußdose zumindest ein Gehäuse auf, welches zumindest einen Grundträger umfaßt. Die Anschlußdose kann an der Anschlußseite eines Solarmoduls als bevorzugter Leiterplatte anordenbar sein und kann dazu in eine Anordnungsposition gebracht werden. In der Anordnungsposition zeigt die Seite des Grundträgers, die dazu ausgelegt ist, an das Solarmodul angeordnet zu werden, nach unten, d.h. Richtung Erdmittelpunkt, wobei das Solarmodul in der Anordnungsposition im wesentlichen parallel zu einem zu einem Geoid ist, d.h. parallel zur Normal-Null-Äquipotentialfläche des Erdschwerefeldes zu der die Gravitationskraft immer senkrecht steht. Diese Anordnung kann auch "horizontal" bezeichnet werden. Die Seite der Anschlußbox bzw. Anschlußdose bzw. des Gehäuses der Anschlußdose, die dazu ausgelegt ist, von dem Solarmodul abgewandt angeordnet zu werden bzw. dem Inneren der Anschlußdosen zugewandt zu sein, kann dementsprechend als "oben" bezeichnet werden. Vorteilhafterweise kann die Anschlußkontaktfeder durch eine von oben wirkende Kraft, d.h. eine Kraft, die von der dem Solarmodul abgewandten und damit leicht zugänglichen Seite der Anschlußdose wirkt, in die Betätigungsposition überführt werden. Gemäß dieser Beschreibung ist die Kraft im wesentlichen in der Kraftrichtung K. In der Anordnungsposition ist die Kraftrichtung K vorzugsweise im wesentlichen parallel zu einer vertikalen Richtung im Bezugssystem der Erde. Vorteilhafterweise können die elektrischen Leitungen des Solarmoduls als bevorzugte elektrische Leiter im wesentlichen ohne Aufbringen einer Einführkraft in den Einführbereich der Kontaktvorrichtung eingeführt werden, wenn die Anschlußkontaktfeder in der Betätigungsposition ist. Gemäß dieser Beschreibung ist die Einführkraft im wesentlichen parallel zu der Einführrichtung. Die Einführrichtung ist in der Anordnungsposition vorzugsweise im wesentlichen parallel zu einer vertikalen Richtung im Bezugssystem der Erde. In anderen Worten ist die Einführrichtung vorzugsweise im wesentlichen entgegengesetzt zu der Kraftrichtung K.

Basierend auf der vorangegangenen Beschreibung ist es insbesondere nicht notwendig, daß die elektrischen Leitungen beim Einführen in den Einführbereich mittelbar und/oder unmittelbar selbst eine Kraft aufbringen müssen bzw. ist lediglich eine sehr geringe Kraft notwendig. Dies ist insofern vorteilhaft, da die elektrischen Leitungen üblicherweise in Form von dünnen Leiterbändern ausgeführt sind. Diese dünnen Leiterbänder sind leicht verformbar und/oder knickbar und/oder biegbar und können daher entsprechend nur geringe Kräfte aufbringen bzw. können diese Leiter nur mit geringen Kräften beaufschlagt werden, ohne daß sich die Leiter beispielsweise verformen. Ferner erfordert das Einführen der elektrischen Leitungen im wesentlichen keine manuelle Arbeit bzw. keine manuellen Vorgänge mehr. Daher ist es vorteilhafterweise möglich, daß Bestückungsautomaten diese Arbeit übernehmen können. Durch ein externes Aufbringen einer Kraft, um die Anschlußkontaktfeder in die Betätigungsposition zu bringen, können vorteilhafterweise größere Kräfte aufgebracht werden, als es durch die elektrischen Leitungen an sich möglich wäre, um die Rückstellkraft der Anschlußkontaktfeder zu überwinden. Deshalb können vorteilhafterweise Federn insbesondere Anschlußkontaktfedern verwendet werden, die eine erhöhte bzw. eine sehr hohe Rückstellkraft besitzen, wodurch sich besonders vorteilhafterweise eine sicherere Kontaktierung ergibt und die Anschlußbox bzw. Anschlußdose sicher und fest mit den elektrischen Leitern des Solarmoduls verbindbar ist. Vorzugsweise beträgt die Rückstellkraft etwa 6 bis etwa 30 N, besonders bevorzugt etwa 10 bis etwa 20 N.

Durch die bevorzugte Ausbildung des Körpers der Anschlußkontaktfeder im wesentlichen als Blattfeder läßt sich die Anschlußkontaktfeder vorteilhafterweise besonders einfach und kostengünstig herstellen.

Vorzugsweise kontaktiert die Anschlußkontaktfeder mit einem zu einem Befestigungsbereich der Anschlußkontaktfeder distalen Ende einen gegenüber und unterhalb liegenden Bereich (als bevorzugtem Anschlußelement) des Anschlußbereichs des Kontaktelementes, so daß eine von oben, d.h. in Kraftrichtung K auf die Anschlußkontaktfeder wirkende Kraft ein Dekontaktieren des distalen Endes der Anschlußkontaktfeder vom Anschlußbereich des Kontaktelementes bewirkt und daß eine von unten, d.h. entgegen der Kraftrichtung K auf die Anschlußkontaktfeder wirkende Kraft ein Andrücken des distalen Endes der Anschlußkontaktfeder an den Anschlußbereich des Kontaktelementes bewirkt.

In anderen Worten weist der Anschlußbereich des Kontaktelementes vorzugsweise einen Anschlußkontaktwiderlagerbereich auf. Ferner weist die Anschlußkontaktfeder vorzugsweise einen Befestigungsbereich, einen Anschlußkontakt und einen Blattfederbereich auf. Der Befestigungsbereich ist beispielsweise derart ausgelegt, um die Anschlußkontaktfeder an dem Anschlußbereich des Kontaktelementes zu befestigen. Der Anschlußkontakt kann ausgeführt sein, um in der Ruheposition der Anschlußkontaktfeder zumindest bereichsweise den Anschlußkontaktwiderlagerbereich des Anschlußbereiches zu kontaktieren.

Vorzugsweise ist der Blattfederbereich zwischen dem Befestigungsbereich und dem Anschlußkontakt angeordnet. Weiterhin vorzugsweise ist der Anschlußbereich zumindest bereichsweise als Hohlprofil ausgeführt und die Anschlußkontaktfeder mit dem Befestigungsbereich im Inneren des Hohlprofils befestigt. Außerdem vorzugsweise ist der zum Befestigungsbereich proximale Bereich des Blattfederbereichs derart gekrümmt ausgeführt, daß der an dem distalen Ende des Blattfederbereichs angeordnete Anschlußkontakt den Anschlußkontaktwiderlagerbereich des Anschlußbereichs an einer Stelle kontaktiert, die relativ zum Befestigungsbereich unterhalb und gegenüber liegend angeordnet ist. Besonders bevorzugt ist der gekrümmte Bereich rückstellfähig ausgebildet, d.h. er ist derart elastisch und/oder plastisch verformbar, daß er nach Einwirken einer verformenden Kraft im wesentlichen wieder in seine Grundposition bzw. Grundform zurückkehrt. Die Grundposition bzw. Grundform ist diejenige Form, die der gekrümmte Bereich beispielsweise in der Ruheposition der Anschlußkontaktfeder einnimmt, d.h. in der Position bzw. in dem Zustand, in der bzw. dem die Anschlußdose nicht mit der Leiterplatte verbunden ist. Insbesondere ist dies die Form bzw. Position, die der gekrümmte Bereich einnimmt, wenn kein elektrischer Leiter in den Einführbereich eingeführt ist und/oder keine Kraft (in der Kraftrichtung K) an der Anschlußkontaktfeder anliegt.

Daraus resultierend, bewirkt eine von oben auf den Blattfederbereich der Anschlußkontaktfeder wirkende Kraft ein Dekontaktieren des vom Befestigungsbereich distalen Endes der Anschlußkontaktfeder vom Anschlußbereich des Kontaktelementes, d.h. des Anschlußkontakts vom Anschlußkontaktwiderlagerbereich, als bevorzugtem Anschlußelement.

Bevorzugt ist das Kontaktelementgehäuse einstückig, insbesondere aus einem Polymer bzw. einem elektrisch nicht leitenden Kunststoff, ausgebildet.

Vorzugsweise weist das Kontaktelement eine Kurzschlußkontaktfeder auf. Besonders bevorzugt umfaßt das Kontaktelement zumindest zwei Kurzschlußkontaktfederaufnahmen, in welche die Kurzschlußkontaktfeder zumindest bereichsweise eingreifen kann. Weiter besonders bevorzugt weist das Kontaktelement einen Kurzschlußkontaktwiderlagerbereich auf.

Vorzugsweise kontaktiert die Kurzschlußkontaktfeder in Ruheposition den Kurzschlußbereich des Kontaktelements im Kurzschlußkontaktwiderlagerbereich.

Vorzugsweise ist bzw. wird die Kurzschlußkontaktfeder nach Einführen eines Anschlußabschnitts eines elektrischen Bauteils, beispielsweise einer Diode, von der Ruheposition der Kürzschlußkontaktfeder in eine Betätigungsposition der Kurzschlußkontaktfeder überführt und die Kurzschlußkontaktfeder kontaktiert den Kurzschlußbereich des Kontaktelements im Kurzschlußkontaktwiderlagerbereich zumindest bereichsweise nicht.

Vorzugsweise ist die Kurzschlußkontaktfeder einstückig ausgeführt. Besonders bevorzugt ist die Kurzschlußkontaktfeder aus Metall gefertigt.

Vorzugsweise weist die Anschlußdose zumindest einen Außenanschlußbereich auf, der zumindest eine verpolungssichere mehrpolige buchse mit männlichen bzw. steckerartigen und/oder weiblichen bzw. buchsenartigen Kontakten aufweist.

Vorzugsweise weist der Anschlußbereich zumindest eine männliche bzw. steckerartige und/oder zumindest eine weibliche bzw. buchsenartige Koaxialbuchse auf.

### Solarpaneel gemäß einem Aspekt

Ein weiterer Aspekt der vorliegenden Erfindung betrifft ein Solarpaneel umfassend:
- zumindest ein im wesentlichen plattenförmiges Solarmodul und
- zumindest eine Anschlußdose gemäß der Erfindung, wobei
das Solarmodul zumindest zwei elektrische Leiter umfaßt und die zumindest zwei elektrischen Leiter jeweils durch einen Öffnungsbereich der Anschlußdose hindurch ragen und jeweils mit einer Kontaktvorrichtung der Anschlußdose verbunden sind. Die Verbindung ist vorzugsweise elektrisch und mechanisch.

In anderen Worten kann das Solarpanel umfassen: ein Solarmodul mit einem im wesentlichen plattenförmigen Körper mit zumindest einer spannungserzeugenden Solarzelle, zumindest zwei mit der zumindest einen Solarzelle verbundenen Leiterbänder, die an einer Oberfläche des Solarmoduls aus diesen herausgeführt sind und im wesentlichen senkrecht zu dieser stehen und zumindest eine erfindungsgemäße Anschlußdose. Vorzugsweise kann die Anschlußdose aufweisen: einen dem Modul zuwandten Grundträger, zumindest zwei Kontaktvorrichtungen, welche in einem oberen, d.h. dem Modul abgewandten, Bereich des Grundträgers angebracht sind und zumindest einen Anschlußbereich, wobei der Grundträger zumindest einen Öffnungsbereich zur Durchführung von elektrischen Leitungen durch den Grundträger aufweist, jede Kontaktvorrichtung ein Kontaktelement, weiter umfassend einen Kurzschlußbereich und einen Anschlußbereich, ein Kontaktelementgehäuse und eine Anschlußkontaktfeder aufweisen kann, wobei die Anschlußkontaktfeder in Ruheposition der Anschlußkontaktfeder den Anschlußbereich des Kontaktelementes vollständig kontaktiert, die Anschlußkontaktfeder in Betätigungsposition der Anschlußkontaktfeder den Anschlußbereich des Kontaktelementes zumindest bereichsweise nicht kontaktiert, so daß zwischen Anschlußkontaktfeder und Anschlußbereich ein Einführbereich angeordnet bzw. definiert ist, und die Anschlußkontaktfeder durch eine von oben auf die Anschlußkontaktfeder wirkende Kraft von der Ruhe- in die Betätigungsposition überführbar ist, und wobei der Einführbereich zumindest bereichsweise oberhalb eines Öffnungsbereiches des Grundträgers angeordnet sein kann, so daß ein im Öffnungsbereich durch den Grundträger durchgeführter elektrischer Leiter bei einer in Betätigungsposition befindlichen Anschlußkontaktfeder ohne Aufbringen einer Einführkraft in den Einführbereich zwischen einem Anschlußelement (in dem Anschlußbereich) und der Anschlußkontaktfeder anordenbar ist.

Da die aus dem Solarmodul herausgeführten Leiterbahnen innerhalb des Solarpaneels keiner mechanischen Beanspruchung unterworfen werden, können diese dünn ausgeführt werden und bedürfen vorteilhafterweise keiner mechanischen Verstärkung.

### Kontaktvorrichtung zum Anordnen in einer Anschlußdose gemäß einem Aspekt

Ein weiterer Aspekt der vorliegenden Erfindung betrifft eine Kontaktvorrichtung zum Anordnen in einer Anschlußdose, wobei
die Kontaktvorrichtung im Inneren der Anschlußdose derart anordenbar ist, daß zumindest ein elektrischer Leiter entlang einer Einführrichtung durch einen Öffnungsbereich in die Anschlußdose einführbar und mit der zumindest einen Kontaktvorrichtung in Kontakt bringbar ist, wobei
- die Kontaktvorrichtung zumindest ein Kontaktelement mit zumindest einer rückstellfähigen Anschlußkontaktfeder und zumindest einem Anschlußelement umfaßt und wobei
- die Anschlußkontaktfeder durch Anlegen einer Kraft parallel zu einer Kraftrichtung K relativ zu dem Anschlußelement derart rückstellfähig verlagerbar ist, daß der zumindest eine elektrische Leiter zumindest teilweise zwischen dem zumindest einen Anschlußelement und der zumindest einen Anschlußkontaktfeder anordenbar ist.

### Verfahren zum automatischen Verbinden einer Anschlußdose gemäß einem Aspekt

Ein weiterer Aspekt der vorliegenden Erfindung betrifft ein Verfahren zum automatischen Verbinden einer Anschlußdose mit einer Leiterplatte, insbesondere einem Solarmodul, mit den Schritten:
- Bereitstellen der Anschlußdose insbesondere gemäß der Erfindung anhand eines Greifmittels, wobei die Anschlußdose zumindest einen Öffnungsbereich und zumindest eine Kontaktvorrichtung umfaßt,
- zumindest teilweise Einführen eines Hilfsmittels in die zumindest eine Kontaktvorrichtung derart, daß eine Anschlußkontaktfeder anhand des Hilfsmittels rückstellfähig verlagert wird und ein Einführbereich in der Kontaktvorrichtung gebildet wird,
- Aktivieren eines Haftmittels an der Anschlußdose und/oder an der Leiterplatte,
- Anordnen der Anschlußdose an einer Fläche der Leiterplatte derart, daß zumindest ein elektrischer Leiter durch zumindest einen Öffnungsbereich der Anschlußdose zumindest teilweise in den Einführbereich der Kontaktvorrichtung eingeführt wird und daß anhand des Haftmittels die Anschlußdose an der Leiterplatte festgelegt ist,
- Entfernen des Hilfsmittels, so daß sich die Anschlußkontaktfeder zumindest teilweise zurückgestellt und eine Verbindung zwischen der Kontaktvorrichtung und dem elektrischen Leiter festgelegt wird,
- Entfernen des Greifmittels.

Das Greifmittel zum Greifen der Anschlußdose kann insbesondere eine zangenförmige und/oder eine unterdruckbetriebene gegenständlich ausgebildete Vorrichtung sein bzw. eine solche Vorrichtung umfassen. Das Hilfsmittel kann eine gegenständlich ausgebildete Vorrichtung sein bzw. eine solche Vorrichtung umfassen und kann insbesondere ein Anzahl von Öffnungsfingern umfassen, welche gleich der Anzahl von Kontaktvorrichtungen ist, so daß jeder Öffnungsfinger eine Kraft an eine Anschlußkontaktfeder einer Kontaktvorrichtung anlegt.

Das Aktivieren des Haftmittels, welches insbesondere ein Klebemittel bzw. Kleber sein kann, beinhaltet beispielsweise ein Auftragen, insbesondere ein Aufsprühen eines verformbaren, insbesondere flüssigen Klebers an bzw. auf der Unterseite der Anschlußdose, insbesondere an bzw. auf einer Kontaktfläche der Anschlußdose, mit welcher die Anschlußdose mit der Leiterplatte in Kontakt tritt. Der Kleber kann beispielsweise die Kontaktfläche vollständig bedecken. Es ist auch möglich, daß der Kleber lediglich an diskreten Punkten auf bzw. an der Kontaktfläche aufgetragen ist. In anderen Worten kann das Haftmittel eine Flüssigkeit umfassen und/oder einen Festkörperkleber umfassen. Insbesondere kann das Haftmittel ähnlich bzw. identisch zu einem zweiseitigen Klebeband sein.

Weiterhin kann das Aktivieren beinhalten, daß der Kleber seine klebende bzw. haftende Eigenschaft erhält. Der Kleber kann z.B. mit Wärme und/oder mit Licht behandelt werden, wie z.B. mit UV Licht bestrahlt werden. Die vorangehenden Ausführungen gelten sinngemäß, falls der Kleber an bzw. auf der Fläche, insbesondere der Kontaktfläche der Leiterplatte angeordnet ist. Der Kleber kann beispielsweise ein sogenannter Zwei-Komponentenkleber sein, wobei eine Komponente an der Anschlußdose angeordnet ist und eine weitere Komponente an der Leiterplatte. Das Aktivieren kann somit beinhalten, daß die beiden Komponenten miteinander in Kontakt gebracht werden. Hierbei kann beispielsweise eine Fläche der Leiterplatte Kleber umfassen, die größer ist, als die Kontaktfläche mit der Anschlußdose.

Alternativ oder zusätzlich kann das Aktivieren des Klebemittels auch umfassen, daß eine Schutzfolie von dem Klebemittel entfernt wird.

### Bevorzugte Ausführungsformen des Verfahrens

Vorzugsweise wird anhand der Anschlußkontaktfeder der elektrische Leiter in dem Einführbereich in der elektrischen Kontaktvorrichtung fixiert und mit der elektrischen Kontaktvorrichtung leitend verbunden.

Weiterhin vorzugsweise wird der zumindest eine elektrische Leiter im wesentlichen kraftfrei in den Einführbereich der Kontaktvorrichtung eingeführt.

Bevorzugt wird an der Anschlußdose eine Abdeckeinrichtung derart angeordnet, daß die Anschlußdose im wesentlichen vollständig verschlossen wird.

Sinngemäß kann die vorliegende Erfindung auch eine entsprechende Verwendung einer Kontaktvorrichtung und/oder eine entsprechende Verwendung einer Anschlußdose zum Verbinden mit einer Leiterplatte umfassen, wobei die obigen Ausführungen entsprechend gelten.

In anderen Worten kann ein Verfahren zum Anbringen einer Anschlußdose an ein Solarmodul als bevorzugter Leiterplatte, folgende Schritte umfassen:
(A) Bereitstellen eines im wesentlichen plattenförmigen Solarmoduls, mit zumindest zwei Leiterbändern, die an einer Oberfläche des Solarmoduls aus diesen herausgeführt sind und im wesentlichen senkrecht zu dieser stehen.
   Vorzugsweise kann der Schritt (A) ferner das Aufrichten der Leiterbänder in eine senkrechte Stellung umfassen.
(B) Bereitstellen einer Anschlußdose, welche aufweisen kann: einen dem Modul zuwandten Grundträger, zumindest zwei Kontaktvorrichtungen, welche in einem oberen, d.h. dem Modul abgewandten Bereich des Grundträgers angebracht sein können, und zumindest einen Anschlußbereich, wobei der Grundträger zumindest einen Öffnungsbereich zur Durchführung von elektrischen Leitungen durch den Grundträger aufweisen kann, jede Kontaktvorrichtung ein Kontaktelement, weiter umfassend einen Kurzschlußbereich und einen Anschlußbereich, ein Kontaktelementgehäuse und eine Anschlußkontaktfeder aufweisen kann, wobei die Anschlußkontaktfeder in Ruheposition den Anschlußbereich des Kontaktelementes vollständig kontaktieren kann, die Anschlußkontaktfeder in Betätigungsposition den Anschlußbereich des Kontaktelementes zumindest bereichsweise nicht kontaktieren kann, so daß zwischen Anschlußkontaktfeder und Anschlußbereich ein Einführbereich angeordnet bzw. definiert ist, und die Anschlußkontaktfeder durch eine von oben auf die Anschlußkontaktfeder wirkende Kraft von der Ruhe- in die Betätigungsposition überführbar sein kann, und wobei der Einführbereich zumindest bereichsweise oberhalb eines Öffnungsbereiches des Grundträgers angeordnet sein kann, so daß ein im Öffnungsbereich durch den Grundträger durchgeführte elektrische Leitung bei einer in Betätigungsposition befindlichen Anschlußkontaktfeder im wesentlichen ohne Aufbringen einer Einführkraft in den Einführbereich zwischen Anschlußbereich und Anschlußkontaktfeder anordenbar sein kann.
(C) Einführen zumindest eines Hilfsmittels von oben in die Kontaktelemente, um die Anschlußkontaktfedern in eine Betätigungsposition zu überführen.
(D) Aufbringen eines Klebemittels an bzw. auf der unteren Seite des Grundträgers und/oder an bzw. auf einer Fläche des Solarmoduls.
(E) Positionieren der Anschlußdose über dem Solarmodul, so daß die Einführbereich über den im wesentlichen senkrecht stehenden Leiterbändern gelegen sind.
(F) Absenken der Anschlußdose, so daß das Klebemittel mit der Oberfläche des Solarmoduls in Kontakt kommt und die Leiterbänder im Einführbereich angeordnet sind.
(G) Das Entfernen des Hilfsmittels, so daß die Anschlußkontaktfedern sich in Richtung Ruheposition bewegen können und dadurch die Leiterbänder zwischen Anschlußkontaktfedern und den Anschlußbereichen der Kontaktelemente eingeklemmt werden.

Dabei können insbesondere die oben genannten Schritte (C), (D), und (E) in beliebiger Reihenfolge durchgeführt werden.

Vorzugsweise kann das Hilfsmittel Teil eines Bestückungsautomatenwerkzeugs sein, so daß das oben beschriebenen Arbeitsschritte vorteilhafterweise zumindest teilweise automatisiert durchgeführt werden können. Vorteilhafterweise werden die aus dem Solarmodul herausgeführten Leiterbahnen im wesentlichen keiner mechanischen Beanspruchung unterworfen, so daß eine verringerte Ausschußquote durch beschädigte Leiterbahnen erreicht wird. Insbesondere sind die Anschlußdose und das Solarmodul durch das vorzugsweise vor dem Zusammensetzen aufgebracht Klebemittel bei Kontakt der Anschlußdose mit dem Solarmodul sehr schnell, insbesondere sofort miteinander verbunden, so daß die Produktionszeit pro Solarpaneel sinkt. Dadurch kann vorteilhafterweise durch das oben beschriebene Verfahren das Solarpaneel kostengünstiger und mit verbesserter Qualität hergestellt werden.

Vorzugsweise umfaßt das obigen Verfahren in einem weiteren Schritt (H) das Schließen der Anschlußdose durch einen Deckel. Dieses Verschließen kann beispielsweise im wesentlichen Fluiddicht, insbesondere wasserdicht und/oder luftdicht sein.

### Figurenbeschreibung

Nachfolgend werden bevorzugte Ausführungsformen der vorliegenden Erfindung anhand der beigefügten Zeichnungen beispielhaft erläutert. Es zeigt
Figur 1: eine perspektivische Ansicht einer Ausführungsform eines Solarpaneels mit einer Anschlußdose;
Figur 2: eine Ansicht gemäß Figur 1;
Figur 3: eine perspektivische Ansicht einer Ausführungsform des Inneren einer Anschlußdose;
Figur 4: eine perspektivische Explosionsansicht einer Ausführungsform einer Anschlußvorrichtung einer Anschlußdose;
Figur 5: eine perspektivische Ansicht einer Ausführungsform des Hilfsmittels;
Figur 6: eine Schnittansicht der Kontaktvorrichtungen.

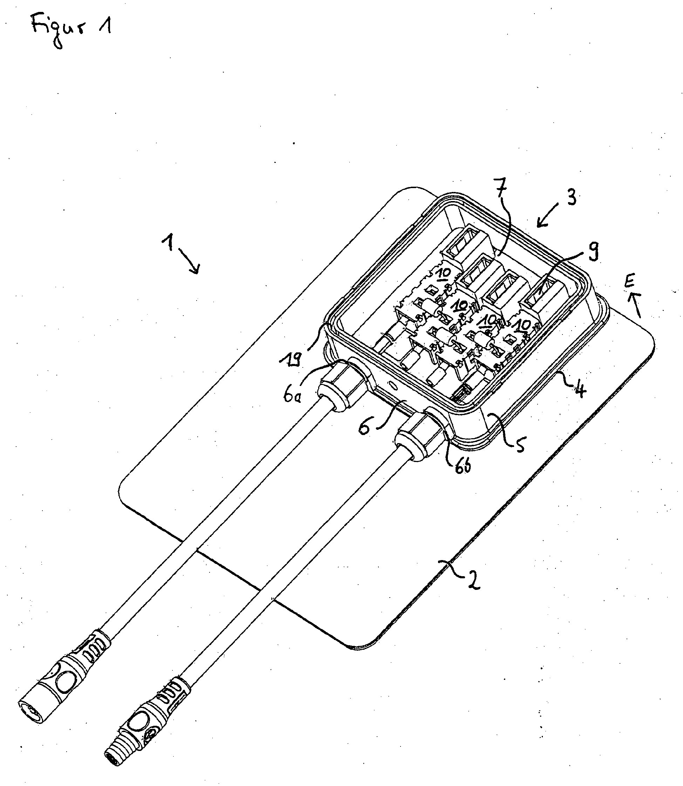

Figur 1 zeigt eine perspektivische Ansicht einer Ausführungsform eines Solarpaneels 1 mit einem plattenförmigen Solarmodul 2, wobei auf einer Bestrahlungsseite des Solarmoduls 2 zumindest eine spannungserzeugende Solarzelle angeordnet ist, deren elektrische Leitungen 9 in Form von Leiterbändern die auf der der Bestrahlungsseite gegenüberliegenden bzw. entgegengesetzen Anschlußseite aus dem Solarmodul 2 herausgeführt werden. Es ist jedoch auch möglich, die elektrischen Leitungen auf der Bestrahlungsseite heraus zu führen.

Eine Anschlußdose 3 ist an bzw. auf der Anschlußseite des Solarmodul 2 an bzw. auf diesem angeordnet. Die Anschlußdose 3 weist ein Gehäuse auf, welches einen Grundträger 4, eine Wandung 5, ein Außenanschlußbereich 6, eine Öffnungsbereich 7 und einen Deckel (nicht gezeigt) umfaßt. Der Grundträger 4 ist an der dem Solarmodul 2 zugewandten Seite der Anschlußdose, d.h. unten, angeordnet. Die dem Solarmodul abgewandte Seite der Anschlußdose wird dementsprechend als "oben" bezeichnet. An dieser Seite wird der Deckel (nicht gezeigt) angeordnet, um die Anschlußdose zu verschließen. Der Grundträger 4 dient vorzugsweise der Befestigung der Anschlußdose 3 an der Anschlußseite des Solarmoduls 2. Der Grundträger 4 weist einen Öffnungsbereich 7 zur Durchführung der elektrischen Leitungen 9 des Solarmoduls 2 auf. Vorzugsweise wird in dieser Ausführungsform jede der elektrischen Leitungen 9 durch einen dieser Leitung zugeordneten Öffnungsbereich 7 durch den Grundträger entlang einer Einführrichtung E, von unten nach oben, durchgeführt, wobei sich jeder Öffnungsbereich 7 von unten nach oben verjüngt, so daß vorteilhafterweise das Einführen erleichtert wird. In der in Figur 1 dargestellten Ausführungsform sind vier Öffnungsbereiche 7 vorhanden und durch jeden Öffnungsbereich 7 wird ein Leiter 9 hindurch geführt.

Die Wandung 5 des Grundträgers 4 erstreckt sich im wesentlichen senkrecht zu dem Grundträger 4. Vorzugsweise ist in einem Bereich der Wandung 5 ein Außenanschlußbereich 6 angeordnet, der in dieser Ausführungsform jeweils einen Koaxialstecker 6a und eine Koaxialbuchse 6b aufweist, um das Solarpaneel 1 mit einer externen Vorrichtung elektrisch zu verbinden. In anderen Worten umfaßt die Wandung 5 zwei Öffnungen, die ermöglichen, daß der Koaxialstecker 6a und die Koaxialbuchse 6b im Inneren der Anschlußdose jeweils mit einer Kontaktvorrichtung 10 in elektrischem Kontakt sind. Ferner weist die Wandung 5 vorzugsweise an ihrem oberen Rand zumindest bereichsweise eine Nut 19 auf, in der vorzugsweise eine Dichtung angeordnet werden kann, so daß die Anschlußdose 3 durch den Deckel, insbesondere fluiddicht, besonders bevorzugt wasserdicht, verschlossen werden kann. Ebenso können die Öffnungen in dem Außenanschlußbereich fluiddicht verschlossen sein.

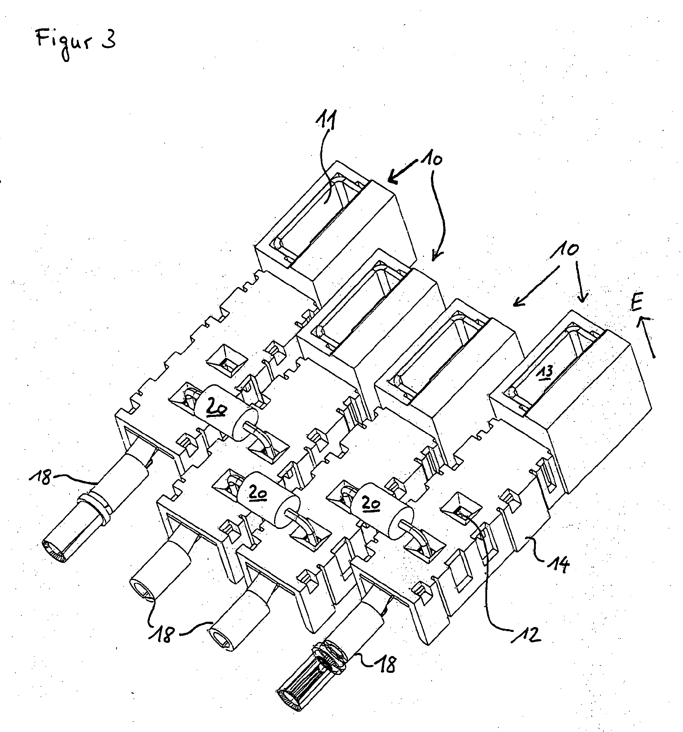

In dieser Ausführungsform sind vier Kontaktvorrichtungen 10, an dem Grundträger 4 angebracht, welche im montierten Zustand der Anschlußdose, d.h. im wesentlichen in Betätigungsposition der Anschlußkontaktfeder (gezeigt in Figur 3), die elektrischen Leitungen 9 des Solarmoduls 2, hier in Form von Leiterbändern, kontaktieren.

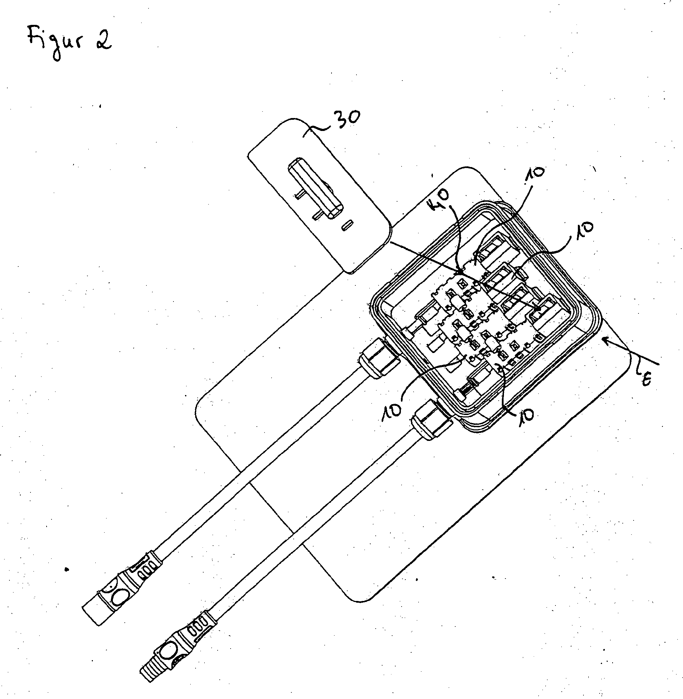

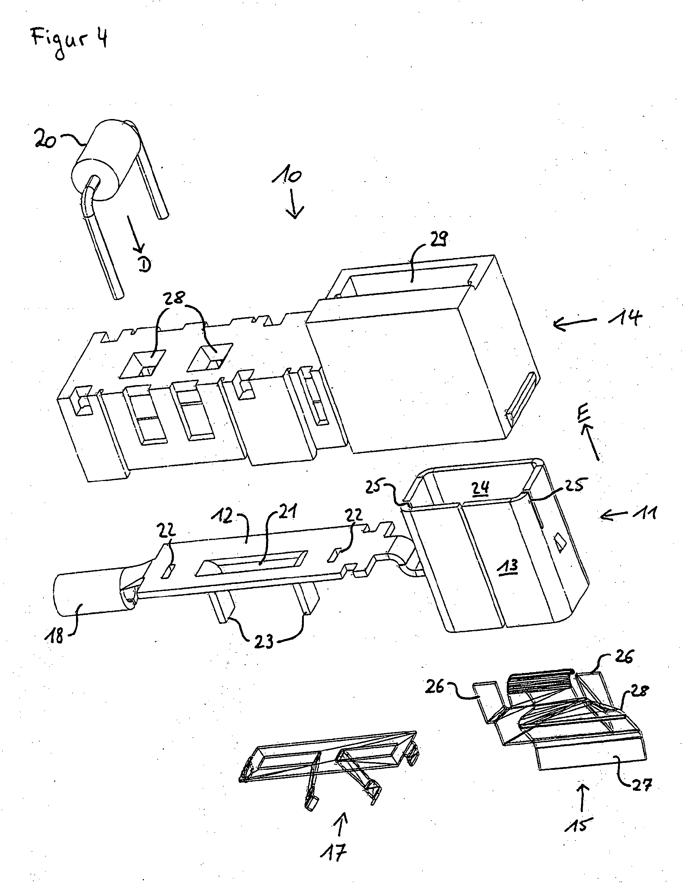

**Figur 2** zeigt eine Ansicht gemäß Figur 1, wobei jedoch ein Hilfsmittel 30 dargestellt ist. Das Hilfsmittel ist noch nicht mit den Kontaktvorrichtungen 10 in Eingriff gebracht bzw. nicht mehr in Eingriff gebracht. Ferner zeigt Figur 2 die Öffnungsrichtung O, entlang der das Hilfsmittel 30 auf die Anschlußdose zubewgt werden kann, um eine Kraft zeitlang der Kraftrichtung K an die entsprechenden Anschlußkontaktfedern (gezeigt in Figur 4) anzulegen. Ferner ist die Einführrichtung E gezeigt, entlang welcher die Leiter 9 in die Öffnungsbereiche 7 eingeführt werden können.

**Figur 3** zeigt eine perspektivische Ansicht des Inneren der Anschlußdose 3, umfassend die vier Kontaktvorrichtungen 10. Jede Kontaktvorrichtung 10 weist ein elektrisch isolierendes Kontaktelementgehäuse 14 und ein elektrisch leitfähiges Kontaktelement 11 auf, welches wiederum einen Kurzschlußbereich 12 und einen Anschlußbereich 13 umfaßt, die miteinander elektrisch durch den elektrisch leitfähigen Körper des Kontaktelementes 11 verbunden sind. Am Anschlußbereich 13 angeordnet befinden sich im montierten Zustand die elektrischen Leitungen 9 (nicht gezeigt) des Solarmoduls 2. Der Anschlußbereich 13 ist vollständig im Inneren der Anschlußdose 3 angeordnet.

Die Anschlußbereiche 13 zweier benachbarte Kontaktvorrichtungen 10 sind über die angeschlossene Solarzellengruppe elektrisch miteinander verbunden. Die Kurzschlußbereiche 12 zweier benachbarter Kontaktvorrichtungen 10 sind jeweils durch Bypass-Dioden 20 elektrisch miteinander so verbunden, daß die Sperrichtung der Bypass-Dioden 20 jeweils antiparallel zu der Stromrichtung des Stroms geschaltet sind, der über die Solarzellengruppe zwischen den benachbarten Kontaktvorrichtungen 10 fließt. Sollte beispielsweise aufgrund einer Abschattung die elektrische Verbindung, welche über die Solarzellengruppe verläuft, einen Widerstand aufweisen, so daß der Spannungsabfall einen vorbestimmbaren Schwellwert überschreitet, so überschreitet auch der Spannungsabfall zwischen den Anschlußbereichen der entsprechenden benachbarten Kontaktvorrichtungen 10 einen davon abhängigen Schwellwert. Bei Überschreitung des vorbestimmbaren Schwellwerts, verliert die entsprechende Bypass-Diode ihre Sperrwirkung und stellt einen Kurzschluß zwischen den benachbarten Kontaktvorrichtungen 10 her. Vorzugsweise fließt der Gesamtstrom des Solarpaneels dadurch nicht durch die überbrückte Solarzellengruppe, wodurch dort weder elektrische Leistungsverluste durch den erhöhten Widerstand der Solarzellengruppe noch eine Beschädigung der Solarzellengruppe, beispielsweise durch Erwärmung aufgrund der elektrischen Verlustleistung, auftreten. Vielmehr fließt der elektrische Strom durch die Kurzschlußbereiche 12.

**Figur 4** zeigt eine perspektivische Explosionsansicht der Ausführungsform der Kontaktvorrichtung 10 der Anschlußdose 3. In dieser Ausführungsform weist jede Kontaktvorrichtung 10 neben dem Kontaktelementgehäuse 14 und dem Kontaktelement 11, eine Kurzschlußkontaktfeder 17 und eine Anschlußkontaktfeder 15 auf.

Das Kontaktelement 11 ist vorzugsweise einstückig aus Metall hergestellt und umfaßt neben dem Kurzschlußbereich 12 und dem Anschlußbereich 13 einen Buchsenbereich 18. Diese Bereiche sind miteinander elektrisch durch den metallischen Körper des Kontaktelementes 11 verbunden.

Der Kurzschlußbereich 12 des Kontaktelementes 11 ist in dieser Ausführungsform als eine im wesentlichen rechteckige Öffnung 21 im Kontaktelement 11 ausgebildet, wobei sich der Kurzschlußbereich 12 in einem Kurzschlußkontaktwiderlagerbereich 23 an beiden kurzen Seiten der Öffnung 21 nach unten entlang einer Diodeneinführrichtung D einer Bypass-Diode 20 und im wesentlichen senkrecht zur Fläche der Öffnung 21 erstreckt. Vorzugsweise sind im Kurzschlußbereich 12 und beabstandet von der Öffnung 21 zumindest zwei Kurzschlußkontaktfederaufnahmen 22 ausgebildet, in welche die Kurzschlußkontaktfeder 17 zumindest bereichsweise eingreifen kann. Die Diodeneinführrichtung D kann beispielsweise im wesentlichen senkrecht zu dem Grundkörper 4 sein. Die Diodeneinführrichtung D kann insbesondere parallel zu der Kraftrichtung K sein.

Die Kurzschlußkontaktfeder 17 ist vorzugsweise einstückig hergestellt und kontaktiert in einer Ruheposition der Kurzschlußkontaktfeder 17 zumindest bereichsweise den Kurzschlußkontaktwiderlagerbereich 23. Durch Einrühren beispielsweise der Bypass-Diode 20 wechselt die Kurzschlußkontaktfeder 17 in eine Betätigungsposition, so daß die Kurzschlußkontaktfeder 17 bereichsweise den Kurzschlußkontaktwiderlagerbereich 23 nicht kontaktiert. Hierbei ist der Anschlußbereich der Bypass-Diode 20 zwischen Kurzschlußkontaktfeder 17 und Kurzschlußkontaktwiderlagerbereich 23 angeordnet und durch eine Rückstellkraft der Kurzschlußkontaktfeder 17 dort festgeklemmt, insbesondere lösbar fixiert.

Der Anschlußbereich 13 des Kontaktelementes 11 ist in dieser Ausführungsform im wesentlichen als Hohlprofil, insbesondere mit im wesentlichen rechteckigem Querschnitt bei horizontaler Schnittebene und/oder im wesentlichen rechteckigem Querschnitt bei im wesentlichen vertikaler Schnittebene ausgebildet. Vorzugsweise ist ein zumindest bereichsweise im wesentlichen ebener Anschlußkontaktwiderlagerbereich 24 als bevorzugtes Anschlußelement 24 derart angeordnet, daß er sich entlang einer Einführrichtung E erstreckt. Der im wesentliche ebene Anschlußkontaktwiderlagerbereich 24 ist derart ausgebildet, daß er ein sich entlang der Einführrichtung E erstreckendes Leiterband 9 (nicht gezeigt) kontaktiert. Der Anschlußbereich 13 weist vorzugsweise zwei Schlitze 25 auf, in weiche die Anschlußkontaktfeder 15 zumindest bereichsweise eingreifen kann. Insbesondere sind der Anschlußkontaktwiderlagerbereich 24 und die Anschlußkontaktfeder 15 derart ausgebildet, daß bei in dem Einführbereich 16 angeordnetem Leiter 9 in Betätigungsposition, jedoch ohne angelegte Kraft, aufgrund der Federkraft der Anschlußkontaktfeder 15 der elektrischen Leiter mit dem Anschlußkontaktwiderlagerbereich 24 und/oder der Anschlußkontaktfeder 15 elektrisch verbunden ist. Weiter ist vorzugsweise aufgrund der Federkraft der elektrische Leiter 9 zwischen der Anschlußkontaktfeder 9 und der Anschlußkontaktwiderlagerbereich 24 fixiert, insbesondere eingeklemmt. Die Fixierung kann lösbar sein, d.h. durch Einführen des Hilfsmittels und Anlegen der Kraft in Kraftrichtung K kann die Anschlußkontaktfeder 15 soweit verlagert werden, daß der elektrische Leiter 9 wieder aus dem Einführbereich 16 entfernt werden kann. Die Anschlußdose ist somit wiederverwendbar. Alternativ oder zusätzlich kann die Anschlußkontaktfeder 15 auch so ausgelegt sein, daß durch Anlegen einer entsprechend großen Kraft an der Anschlußdose 3 entgegen der Kraftrichtung K und/oder dem Solarmodul 2 in der Kraftrichtung K die Anschlußdose 3 von dem Solarmodul 2 entfernbar ist und die Verbindung zwischen dem Leiter 9 und der Kontaktvorrichtung 10 lösbar ist.

Die Anschlußkontaktfeder 15 weist einen Befestigungsbereich 26, einen Anschlußkontakt 27 und einen Blattfederbereich 28 auf. Der Befestigungsbereich 26 ist derart ausgelegt, um zumindest bereichsweise in die Schlitze 25 einzugreifen und die Anschlußkontaktfeder 15 an dem Anschlußbereich 13 des Kontaktelementes 11 zu befestigen bzw. festzulegen. Der Anschlußkontakt 27 ist zumindest bereichsweise eben ausgeführt, um in einer Ruheposition der Anschlußkontaktfeder 15 zumindest bereichsweise den Anschlußkontaktwiderlagerbereich 24, insbesondere formschlüssig, zu kontaktieren. Der im wesentlichen den Körper der Anschlußkontaktfeder 15 bildende Blattfederbereich 28 ist vorzugsweise im wesentlichen als Blattfeder ausgebildet. Weiterhin vorzugsweise ist ein zum Befestigungsbereich 26 proximaler Bereich des Blattfederbereichs 28 gekrümmt ausgeführt. Die Krümmung ist derart ausgebildet, daß der an einem distalen Ende des Blattfederbereichs 28 angeordnete Anschlußkontakt 27 einen Anschlußkontaktwiderlagerbereich 24 kontaktiert, wobei der Anschlußkontaktwiderlagerbereich 24 unterhalb des Befestigungsbereichs 26 bzw. der Schlitze 25, d.h. entgegen der Einführrichtung E angeordnet ist, und diesem gegenüber liegt. Aus dieser Anordnung resultiert, daß eine von oben, d.h. entgegen der Einführrichtung E (und somit entgegen der Kraftrichtung K), auf den Blattfederbereich 28 der Anschlußkontaktfeder 15 wirkende Kraft ein Dekontaktieren des vom Befestigungsbereich 26 distalen Endes der Anschlußkontaktfeder 15 vom Anschlußbereich 13 des Kontaktelementes 11 bewirkt. In anderen Worten wird der Anschlußkontakt 27 von dem Anschlußkontaktwiderlagerbereich 24 entfernt bzw. gelöst. Eine von unten, d.h. in Einführrichtung E, auf den Blattfederbereich 28 der Anschlußkontaktfeder 15 wirkende Kraft bewirkt hingegen ein Andrücken bzw. ein Sichern des elektrisch Kontakts.

Der Buchsenbereich 18 des Kontaktelementes 11 ist in dieser Ausführungsform als ein im wesentlichen zylindrischer Bereich ausgeführt.

Das Kontaktelementgehäuse 14 ist vorzugsweise aus elektrisch isolierendem Material, beispielsweise einem Polymer oder Gummi, hergestellt. Das Kontaktelementgehäuse 14 weist zumindest eine Anschlußöffnung 28 auf, die derart angeordnet ist, daß der Anschlußbereich der Bypass-Diode 20 durch die Anschlußöffnung 28 in den Kurzschlußbereich 12 eingeführt werden kann. Vorzugsweise ist diese Anschlußöffnung 28 konisch, d.h. entlang der Diodeneinführrichtung D der Bypass-Diode 20 verjüngt. Das Kontaktelementgehäuse 14 weist eine Anschlußbereichsöffnung 29 auf, die im wesentlichen oberhalb des Anschlußbereichs 13 angeordnet ist und durch die, beispielsweise mittels eines Hilfsmittels 30 (gezeigt in Figur 2), eine Kraft auf den Blattfederbereich 28 der Anschlußkontaktfeder 15 übertragbar ist.

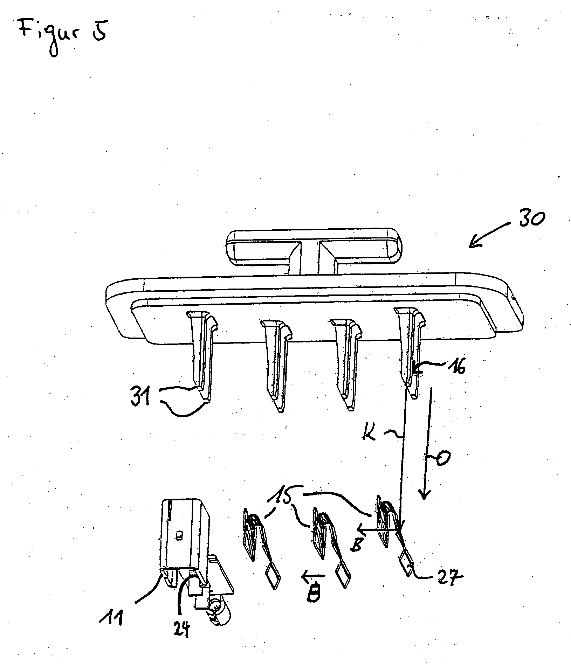

**Figur 5** zeigt eine perspektivische Ansicht des Hilfsmittels 30 bzw. Öffnungswerkzeugs 30 bzw. Öffnungshilfsmittels 30 als bevorzugtem Hilfsmittel und die dazugehörige Anordnung der Anschlußkontaktfedern 15, wie sie in der Anschlußdose angeordnet sind. Da das Öffnungshilfsmittel 30 noch nicht in die Kontaktelemente 11 eingeführt ist, befinden sich die Anschlußkontaktfedern 15 in Ruheposition, d.h. der Anschlußkontakt 27 der Anschlußkontaktfedern 15 kontaktiert den Anschlußkontaktwiderlagerbereich 24 des Anschlußbereichs 13 des Kontaktelementes 11.

Das Öffnungshilfsmittel 30 umfaßt vorzugsweise für jede zu öffnende Anschlußkontaktfeder 15 ein Paar Öffnungsfinger 31, die vorzugsweise in Öffnungsrichtung O konisch ausgebildet sind. In Figur 5 ist die Öffnungsrichtung O gleich der Kraftrichtung K. Es kann auch für jede Anschlußkontaktfeder 15 jeweils ein Öffnungsfinger vorgesehen sein. Die Öffnungsfinger 31 eines Paares sind vorzugsweise beabstandet voneinander angeordnet. Das Öffnungshilfsmittel 30 ist entlang der Öffnungsrichtung O in die Kontaktelemente einführbar. Durch das Einführen des Öffnungshilfsmittels 30 wird der Anschlußkontakt 27 zumindest einer Anschlußkontaktfeder 15 von der Ruheposition in eine Betätigungsposition überführt, wobei sich der Anschlußkontakt 27 entlang einer Bewegungsrichtung F der Anschlußkontaktfeder 15 verlagert. In anderen Worten wird durch das Einführen des Hilfsmittels 30 entlang der Öffnungsrichtung O eine Kraft in Kraftrichtung K an die Anschlußkontaktfeder 15 angelegt. In der Betätigungsposition ist der Anschlußkontakt 27 der Anschlußkontaktfeder 15 von dem Anschlußkontaktwiderlagerbereich 24 beabstandet. Der in Betätigungsposition befindliche Anschlußkontakt 27, der Anschlußkontaktwiderlagerbereich 24 und die Öffnungsfinger 31 umgeben einen Einführbereich 16. Der Einführbereich 16 ist zumindest bereichsweise oberhalb des Öffnungsbereiches 7 des Grundträgers 4 angeordnet, so daß der durch den Öffnungsbereich 7 durchgeführte elektrische Leiter 9 im wesentlichen ohne Aufbringen einer Einführkraft in den Einführbereich 16 anordenbar ist. In Figur 5 ist der Einführbereich 16 hinsichtlich der Öffnungsfinger 31 dargestellt, Figur 5 ist jedoch eine Explosionsdarstellung, so daß der Einführbereich 16 mittels der Öffnungsfinger 31 innerhalb des Kontaktelements 11 positioniert ist, sofern die Öffnungsfinger 31 in dem Kontaktelement 11 angeordnet sind.

Nach Entfernen des Öffnungshilfmittels 30 verlagert sich der Anschlußkontakt 27 entgegen der Bewegungsrichtung B der Anschlußkontaktfeder 15 zurück in Richtung seiner Ruheposition. Diese Ruheposition wird im wesentlichen nicht erreicht, da die elektrische Leitung 9 zwischen dem Anschlußkontakt 27 und dem Anschlußkontaktwiderlagerbereich 24 angeordnet und durch die Rückstellkraft der Anschlußkontaktfeder 15 festgeklemmt ist. In anderen Worten drückt aufgrund der Federkraft der Anschlußkontaktfeder 15 der Anschlußkontakt 27 den elektrischen Leiter 9, der in dem Einführbereich 16 angeordnet ist, gegen den Anschlußkontaktwiderlagerbereich 24, so daß ein elektrischer Kontakt zwischen dem Anschlußbereich und dem elektrischen Leiter 9 hergestellt ist bzw. wird.

In anderen Worten wird beispielsweise das Öffnungshilfsmittel 30 und insbesondere werden die Öffnungsfinger 31 entlang der Öffnungsrichtung O und auch entlang der Kraftrichtung K auf die Anschlußkontaktfedern 15 hin bewegt. Die Öffnungsfinger drücken somit entlang der Kraftrichtung K auf die Anschlußkontaktfedern 15. Als Resultat werden die Anschlußkontaktfedern 15 entlang der Bewegungsrichtung B bewegt. Anders ausgedrückt wird an das Öffnungshilfsmittel 30 eine Kraft entlang der Kraftrichtung K angelegt. Diese Kraft kann manuell und/oder anhand einer Maschine an dem Öffnungsmittel 30 angelegt werden. Anhand der Öffnungsfinger 31 wird die Kraft auf die Anschlußkontaktfedern 15 übertragen. Bei vektorieller Betrachtung der Kraft wird zwar ein Kraft entlang der Kraftrichtung K an den Anschlußkontaktfedern 15 angelegt. Da die Anschlußkontaktfedern 15 jedoch an dem Kontaktelement festgelegt sind, wirkt auf die Anschlußkontaktfedern 15 eine Kraft entlang der Bewegungsrichtung B, weshalb die Anschlußkontaktfedern 15 verformt werden und insbesondere die Anschlußkontakte 27 entlang der Bewegungsrichtung B bewegt bzw. verlagert werden. Die Bewegungsrichtung B ist vorzugsweise senkrecht zu der Kraftrichtung K. Die Bewegungsrichtung B und die Kraftrichtung K können jedoch auch andere Winkel zueinander, vorzugsweise zwischen etwa 70° und etwa 110°, besonders bevorzugt zwischen etwa 80° und etwa 100° aufweisen.

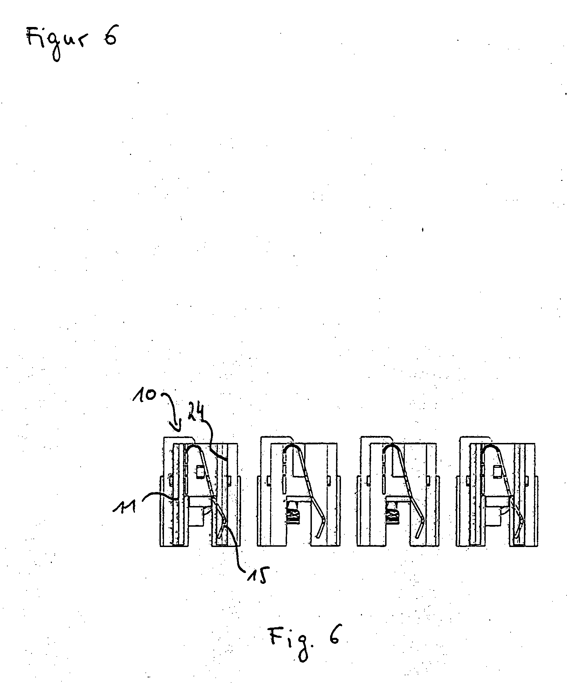

**Figur 6** zeigt eine Schnittansicht durch vier Kontaktvorrichtungen 10, jeweils mit einem Kontaktelement 11 und einer Anschlußkontaktfeder 15 und einem Anschlußelement 24. Die Anschlußkontaktfedern sind in einer Ruheposition.

Die vorliegende Erfindung ist nicht auch die obigen, beispielhaft beschriebenen Ausführungsformen beschränkt. Vielmehr können einzelne Elemente und/oder Merkmale eines jeden beschriebenen Aspekts und/oder einer jeden beschriebenen Ausführungsform mit einzelnen Elementen und/oder Merkmalen der weiteren Aspekte und/oder weiteren Ausführungsformen in beliebiger Weise miteinander kombiniert werden und somit weitere Aspekte und/oder Ausführungsformen gebildet werden.

### Bezugszeichenliste

- 1: Solarpaneel
- 2: Solarmodul
- 3: Anschlußdose
- 4: Grundträger
- 5: Rand
- 6: Außenanschlußbereich
- 6a: Koaxialstecker
- 6b: Koaxialbuchse
- 7: Öffnungsbereich
- 9: elektrischer Leiter
- 10: Kontaktvorrichtung
- 11: Kontaktelement
- 12: Kurzschlußbereich
- 13: Anschlußbereich
- 14: Kontaktelementgehäuse
- 15: Anschlußkontaktfeder
- 16: Einführbereich
- 17: Kurzschlußkontaktfeder
- 18: Buchsenbereich
- 19: Nut
- 20: Bypass-Diode
- 21: Öffnung
- 22: Kurzschlußkontaktfederaufnahmen
- 23: Kurzschlußkontaktwiderlagerbereich
- 24: Anschlußkontaktwiderlagerbereich
- 25: Schlitze
- 26: Befestigungsbereich der Anschlußkontaktfeder 15
- 27: Anschlußkontakt der Anschlußkontaktfeder 15
- 28: konische Anschlußöffnung
- 29: Anschlußbereichsöffnung
- 30: Öffnungshilfsmittel
- 31: Öffnungsfinger
- B: Bewegungsrichtung
- E: Einführrichtung
- K: Kraftrichtung
- O: Öffnungsrichtung

## Patentansprüche

1. Anschlußdose (3) für eine Leiterplatte (2), insbesondere für ein Solarmodul (2), umfassend:
- einen Grundträger (4) mit zumindest einem Öffnungsbereich (7) und
- zumindest eine Kontaktvorrichtung (10), wobei
-- die zumindest eine Kontaktvorrichtung (10) im Inneren des Grundträgers (4) derart angeordnet ist, daß zumindest ein elektrischer Leiter (9) der Leiterplatte (2) entlang einer Einführrichtung (E) durch den zumindest einen Öffnungsbereich (7) in die Anschlußdose (3) einführbar und mit der zumindest einen Kontaktvorrichtung (10) in Kontakt bringbar ist, wobei die Einführrichtung (E) im wesentlichen senkrecht zum Grundträger (4) ist;
-- die zumindest eine Kontaktvorrichtung (10) zumindest ein Kontaktelement (11) mit zumindest einer rückstellfähigen Anschlußkontaktfeder (15) und zumindest einem Anschlußelement (24) umfaßt und wobei
-- die zumindest eine Anschlußkontaktfeder (15) durch Anlegen einer Kraft parallel zu einer Kraftrichtung (K) relativ zu dem Anschlußelement (24) derart rückstellfähig verlagerbar ist, daß der zumindest eine elektrische Leiter (9) der Leiterplatte (2) zumindest teilweise zwischen dem zumindest einen Anschlußelement (24) und der zumindest einen Anschlußkontaktfeder (15) anordenbar ist, und wobei
bei angelegter Kraft entlang der Kraftrichtung (K) die zumindest eine Anschlußkontaktfeder (15) von dem zumindest einen Anschlußelement (24) beabstandet ist, derart daß ein Einführbereich (16) zwischen der zumindest einen Anschlußkontaktfeder (15) und dem Anschlußelement (24) gebildet ist wobei der Einführbereich (16) zumindest bereichsweise über dem zumindest einen Öffnungsbereich angeordnet ist.

2. Anschlußdose (3) nach Anspruch 1, wobei die Kontaktvorrichtung derart ausgelegt ist, daß die Kraft durch ein Hilfsmittel an der Anschlußkontaktfeder anlegbar ist.

3. Anschlußdose (3) nach einem der vorangegangenen Ansprüche, wobei die zumindest eine Anschlußkontaktfeder (15) derart rückstellfähig ausgebildet ist, daß bei Fehlen der angelegten Kraft die zumindest eine Anschlußkontaktfeder (15) den zwischen Anschlußkontaktfeder (15) und Anschlußelement (24) angeordneten elektrischen Leiter (9) fixiert und mit der Kontaktvorrichtung elektrisch leitend verbindet.

4. Anschlußdose (3) nach einem der vorangegangenen Ansprüche, wobei jeder Kontakteinrichtung (10) ein Öffnungsbereich (7) zugeordnet ist und wobei jede Kontaktvorrichtung (10) den zugeordneten Öffnungsbereich (7) umfängt.

5. Anschlußdose (3) nach einem der vorangegangen Ansprüche, wobei in einer Ruheposition die zumindest ein Anschlußkontaktfeder (15) das zumindest eine Anschlußelement (24) zumindest teilweise mechanisch kontaktiert.

6. Anschlußdose (3) nach einem der vorangegangenen Ansprüche, wobei die zumindest eine Kontaktvorrichtung (10) derart relativ zu dem zumindest einen Öffnungsbereich angeordnet ist, daß die Kraftrichtung (K) und die Einführrichtung entgegengesetzt sind.

7. Anschlußdose (3) nach einem der vorangegangenen Ansprüche, wobei der Einführbereich (16) derart ausgebildet ist, daß der zumindest eine elektrische Leiter (9) im wesentlichen kraftfrei durch den Öffnungsbereich (7) in den Einführbereich (16) einführbar ist.

8. Anschlußdose (3) nach einem der vorangegangenen Ansprüche, wobei die Anschlußkontaktfeder (15) eine Blattfeder ist.

9. Anschlußdose (3) nach einem der vorangegangenen Ansprüche, wobei
die Anschlußkontaktfeder (15) einen Befestigungsbereich (26) aufweist, mit dem die Anschlußkontaktfeder an der Kontaktvorrichtung (10) befestigt ist, und die Anschlußkontaktfeder einen relativ zu dem Befestigungsbereich (26) proximalen Bereich und einen relativ zu dem Befestigungsbereich (26) distalen Bereich aufweist, und wobei
der proximale Bereich derart ausgebildet ist, daß bei Anlegen einer Kraft parallel zu der Kraftrichtung (K) an dem proximalen Bereich die Anschlußkontaktfeder (15) das Anschlußelement (24) dekontaktiert und beim Anlegen einer Kraft anitparallel zu der Kraftrichtung (K) an dem distalen Bereich die Anschlußkontaktfeder (15) das Anschlußelement (24) kontaktiert, wobei die Anschlußkontaktfeder (15) in dem proximalen Bereich bevorzugt eine Biegung von etwa 10° bis etwa 170° aufweist.

10. Solarpaneel (1) umfassend:
- zumindest ein im wesentlichen plattenförmiges Solarmodul (2) und
- zumindest eine Anschlußdose (3) gemäß einem der vorangegangenen Ansprüche, wobei
das Solarmodul (2) zumindest zwei elektrische Leiter (9) umfaßt und die zumindest zwei elektrischen Leiter (9) jeweils durch einen Öffnungsbereich (7) der Anschlußdose (3) hindurch ragen und jeweils mit einer Kontaktvorrichtung (10) der Anschlußdose (3) verbunden sind.

11. Verfahren zum automatischen Verbinden einer Anschlußdose (3) mit einer Leiterplatte (2), insbesondere einem Solarmodul (2), mit den Schritten:
- Bereitstellen der Anschlußdose (3) anhand eines Greifmittels, wobei die Anschlußdose (3) eine Anschlußdose (3) nach einem der Ansprüche 1 bis 9 ist,
- zumindest teilweise Einführen eines Hilfsmittels (30) in die zumindest eine Kontaktvorrichtung (10) derart, daß eine Anschlußkontaktfeder (15) anhand des Hilfsmittels (30) rückstellfähig verlagert wird und ein Einführbereich (16) in der Kontaktvorrichtung (10) gebildet wird,
- Aktivieren eines Haftmittels an der Anschlußdose (3) und/oder an der Leiterplatte (2),
- Anordnen der Anschlußdose (3) an einer Fläche der Leiterplatte (2) derart, daß zumindest ein elektrischer Leiter (9) durch zumindest einen Öffnungsbereich (7) der Anschlußdose (3) zumindest teilweise in den Einführbereich (16) der Kontaktvorrichtung (10) eingeführt wird und daß anhand des Haftmittels die Anschlußdose (3) an der Leiterplatte (2) festgelegt ist,
- Entfernen des Hilfsmittels (30), so daß sich die Anschlußkontaktfeder (15) zumindest teilweise zurückgestellt und eine Verbindung zwischen der Kontaktvorrichtung (10) und dem elektrischen Leiter (9) festgelegt wird,
- Entfernen des Greifmittels.

12. Verfahren nach Anspruch 11, wobei anhand der Anschlußkontaktfeder (15) der elektrische Leiter (9) in dem Einführbereich (16) in der elektrischen Kontaktvorrichtung (10) fixiert wird und mit der elektrischen Kontaktvorrichtung (10) leitend verbunden wird und wobei der zumindest eine elektrische Leiter (9) bevorzugt im wesentlichen kraftfrei in den Einführbereich (16) der Kontaktvorrichtung (10) eingeführt wird.

13. Verfahren nach einem der Ansprüche 11 oder 12, wobei an der Anschlußdose (3) eine Abdeckeinrichtung (8) derart angeordnet wird, daß die Anschlußdose (3) im wesentlichen vollständig verschlossen wird.

## Claims

1. A connection box (3) for a conductor board (2), in particular for a solar module (2), comprising:
- a basic support (4) having at least one opening region (7), and
- at least one contact device (10), wherein
- the at least on contact device (10) is arranged inside the basic support (4) such that at least one electric conductor (9) of the conductor board (2) is insertable along an insertion direction (E) into the connection box (3) through the at least one opening portion (7) and is adapted for being contacted to the at least one contact device (10), the insertion direction (E) being substantially perpendicular to the basic support (4);
- the at least one contact device (10) comprises at least one contact element (11) having at least one resilient connecting contact spring (15) and at least one connecting element (24), and wherein
- the at least one connecting contact spring (15), by means of applying a force parallel to a direction of force (K) with respect to the connecting element (24), is resiliently displaceable such that the at least one electric conductor (9) of the conductor board (2) is adapted for being arranged at least partly between the at least one connecting element (24) and the at least one connecting contact spring (15), and wherein
when a force is applied along the direction of force (K), the at least one connecting contact spring (15) is spaced apart from the at least one connecting element (24) such that an insertion region (16) is formed between the at least one connecting contact spring (15) and the connecting element (24), wherein the insertion region (16) is arranged at least in some regions above the at least one opening region.

2. The connection box (3) according to claim 3, wherein the contact device is designed such that the force is applicable to the connecting contact spring via a tool.

3. The connection box (3) according to any one of the preceding claims, wherein the at least one connecting contact spring (15) is formed to be resilient such that, in absence of the applied force, the at least one connecting contact spring (15) fixes the electric conductor (9) arranged between the connecting contact spring (15) and the connecting element (24) and connects the electric conductor to the contact device in an electrically conductive manner.

4. The connection box (3) according to any one of the preceding claims, wherein a respective opening region (7) is assigned to each contact device (10), and wherein each contact device (10) surrounds the assigned opening region (7).

5. The connection box (3) according to any one of the preceding claims, wherein, in a normal position, the at least one connecting contact spring (15) mechanically contacts the at least one connecting element (24) at least partially.

6. The connection box (3) according to any one of the preceding claims, wherein the at least one contact device (10) is arranged with respect to the at least one opening region such that the direction of force (K) and the insertion direction are opposite to each other.

7. The connection box (3) according to any one of the preceding claims, wherein the insertion region (16) is formed such that the at least one electric conductor (9) is insertable into the insertion region (16) through the opening region (7) in manner substantially free from forces.

8. The connection box (3) according to any one of the preceding claims, wherein the connecting contact spring (15) is a leaf spring.

9. The connection box (3) according to any one of the preceding claims, wherein the connecting contact spring (15) has an attachment portion (26) by means of which the connecting contact spring is attached to the contact device (10), and the connecting contact spring has a portion proximal with respect to the attachment portion (26) and a portion distal with respect to the attachment portion (26), and wherein
the proximal portion is formed such that, when a force in a direction parallel to the direction of force (K) is applied to the proximal portion, the connecting contact spring (15) disconnects the connecting element (24), and, when a force in a direction anti-parallel to the direction of force (K) is applied to the distal portion, the connecting contact spring (15) connects the connecting element (24), wherein the connecting contact spring (15) preferably has a curvature of about 10° to about 170° at the proximal portion.

10. A solar panel (1), comprising:
- at least one substantially plate-shaped solar module (2), and
- at least one connecting box (3) according to any one of the preceding claims, wherein
the solar module (29 comprises at least two electric conductors (9), and the at least two electric conductors (9) each project through an opening region (7) of the connection box (3) and are each connected to a contact device (10) of the connection box (3).

11. A method of automatically connecting a connection box (3) to a conductor board (2), in particular to a solar module (2), comprising the steps of:
- providing the connection box (3) by means of a gripping means, wherein the connection box (3) is a connection box (3) according to any one of claims1 to 9,
- inserting, at least partially, a tool (30) into the at least one contact device (10) such that a connecting contact spring (15) is resiliently displaced by means of the tool (30), and that an insertion region (16) is formed in the contact device (10),
- activating an adhesive at the connecting box (3) and/or at the conductor board (2),
- arranging the connecting box (3) at a surface of the conductor board (2) such that at least one electric conductor (9) is inserted at least partially through the opening region (7) into the insertion region (16) of the contact device (10), and that the connecting box (3) is fixed to the conductor board (2) by means of the adhesive,
- removing the tool (30) such that the connecting contact spring (15) returns at least partially, and a connection is established between the contact device (10) and the electric conductor (9),
- removing the gripping means.

12. The method according to claim 11, wherein the electric conductor (9) is fixed in the opening region (16) in the electric contact device (10) and is conductively connected to the electric contact device (10) by means of the connecting contact spring (15), wherein the at least one electric conductor (9) preferably is inserted into the insertion region (16) of the contact device (10) in a manner substantially free from forces.

13. The method according to one of claims 11 or 12, wherein a cover device (8) is arranged at the connection box (3) such that the connection box (3) is substantially completely closed.

## Revendications

1. Boîte de jonction (3) pour une carte de circuit imprimé (2), notamment pour un module solaire (2), comprenant :
- un support de base (4) avec au moins une région d'ouverture (7) et
- au moins un dispositif de contact (10), dans laquelle
-- l'au moins un dispositif de contact (10) est disposé à l'intérieur du support de base (4) de telle sorte qu'au moins un conducteur électrique (9) de la carte de circuit imprimé (2) peut être introduit le long d'une direction d'introduction (E) à travers l'au moins une région d'ouverture (7) dans la boîte de jonction (3) et peut être amené en contact avec l'au moins un dispositif de contact (10), dans laquelle la direction d'introduction (E) est essentiellement perpendiculaire au support de base (4) ;
-- l'au moins un dispositif de contact (10) comprend au moins un élément de contact (11) avec au moins un ressort de connecteur (15) pouvant être rappelé et au moins un élément de raccord (24), et dans laquelle
-- l'au moins un ressort de connecteur (15) peut être déplacé de manière à pouvoir être rappelé par application d'une force parallèle à une direction de force (K) par rapport à l'élément de raccord (24) de telle sorte que l'au moins un conducteur électrique (9) de la carte de circuit imprimé (2) peut être disposé au moins partiellement entre l'au moins un élément de raccord (24) et l'au moins un ressort de connecteur (15), et dans laquelle
en cas de force appliquée le long de la direction de force (K), l'au moins un ressort de connecteur (15) est écarté de l'au moins un élément de raccord (24) de telle sorte qu'une région d'introduction (16) entre l'au moins un ressort de connecteur (15) et l'élément de raccord (24) est formée, dans laquelle la région d'introduction (16) est disposée au moins par région au-dessus de l'au moins une région d'ouverture.

2. Boîte de jonction (3) selon la revendication 1, dans laquelle le dispositif de contact est conçu de telle sorte que la force peut être appliquée par un moyen sur le ressort de connecteur.

3. Boîte de jonction (3) selon une des revendications précédentes, dans laquelle l'au moins un ressort de connecteur (15) est réalisé de manière à pouvoir être rappelé de telle sorte qu'en cas d'absence de la force appliquée, l'au moins un ressort de connecteur (15) fixe le conducteur électrique (9) disposé entre le ressort de connecteur (15) et l'élément de raccord (24) et le connecte de manière électriquement conductrice au dispositif de contact.

4. Boîte de jonction (3) selon une des revendications précédentes, dans laquelle une région d'ouverture (7) est associée à chaque dispositif de contact (10) et dans laquelle chaque dispositif de contact (10) entoure la région d'ouverture associée (7).

5. Boîte de jonction (3) selon une des revendications précédentes, dans laquelle l'au moins un ressort de connecteur (15) vient en contact avec l'au moins un élément de raccord (24) de manière au moins partiellement mécanique dans une position de repos.

6. Boîte de jonction (3) selon une des revendications précédentes, dans laquelle l'au moins un dispositif de contact (10) est disposé par rapport à l'au moins une région d'ouverture de telle sorte que la direction de force (K) et la direction d'introduction sont opposées.

7. Boîte de jonction (3) selon une des revendications précédentes, dans laquelle la région d'introduction (16) est réalisée de telle sorte que l'au moins un conducteur électrique (9) peut être introduit essentiellement sans force à travers la région d'ouverture (7) dans la région d'introduction (16).

8. Boîte de jonction (3) selon une des revendications précédentes, dans laquelle le ressort de connecteur (15) est un ressort à lames.

9. Boîte de jonction (3) selon une des revendications précédentes, dans laquelle le ressort de connecteur (15) présente une région de fixation (26) avec laquelle le ressort de connecteur est fixé au dispositif de contact (10), et le ressort de connecteur présente une région proximale par rapport à la région de fixation (26) et une région distale par rapport à la région de fixation (26), et dans laquelle la région proximale est réalisée de telle sorte qu'en cas d'application d'une force parallèle à la direction de force (K) sur la région proximale, le ressort de connecteur (15) se sépare de l'élément de raccord (24) et en cas d'application d'une force antiparallèle à la direction de force (K) sur la région distale, le ressort de connecteur (15) vient en contact avec l'élément de raccord (24), dans laquelle le ressort de connecteur (15) présente dans la région proximale de préférence une courbure d'environ 10° à environ 170°.

10. Panneau solaire (1) comprenant:
- au moins un module solaire (2) essentiellement en forme de plaque et
- au moins une boîte de jonction (3) selon une des revendications précédentes, dans lequel
le module solaire (2) comprend au moins deux conducteurs électriques (9) et les au moins deux conducteurs électriques (9) dépassent chacun à travers une région d'ouverture (7) de la boîte de jonction (3) et sont chacun connectés à un dispositif de contact (10) de la boîte de jonction (3).

11. Procédé de connexion automatique d'une boîte de jonction (3) à une carte de circuit imprimé (2), notamment un module solaire (2), avec les étapes :
- mise à disposition de la boîte de jonction (3) à l'aide d'un moyen de préhension, dans lequel la boîte de jonction (3) est une boîte de jonction (3) selon une des revendications 1 à 9,
- introduction au moins partielle d'un moyen (30) dans l'au moins un dispositif de contact (10) de telle sorte qu'un ressort de connecteur (15) est déplacé de manière à pouvoir être rappelé à l'aide du moyen (30) et une région d'introduction (16) est formée dans le dispositif de contact (10),
- activation d'un adhésif sur la boîte de jonction (3) et/ou sur la carte de circuit imprimé (2),
- disposition de la boîte de jonction (3) sur une face de la carte de circuit imprimé (2) de telle sorte qu'au moins un conducteur électrique (9) est introduit à travers au moins une région d'ouverture (7) de la boîte de jonction (3) au moins partiellement dans la région d'introduction (16) du dispositif de contact (10) et que la boîte de jonction (3) est fixée à la carte de circuit imprimé (2) à l'aide de l'adhésif,
- retrait du moyen (30) de sorte que le ressort de connecteur (15) est au moins partiellement remis à sa place et une connexion entre le dispositif de contact (10) et le conducteur électrique (9) est fixée,
- retrait du moyen de préhension.

12. Procédé selon la revendication 11, dans lequel le conducteur électrique (9) est fixé dans la région d'introduction (16) dans le dispositif de contact électrique (10) à l'aide du ressort de connecteur (15) et est connecté de manière conductrice au dispositif de contact électrique (10), et dans lequel l'au moins un conducteur électrique (9) est de préférence introduit essentiellement sans force dans la région d'introduction (16) du dispositif de contact (10).

13. Procédé selon une des revendications 11 ou 12, dans lequel un dispositif de recouvrement (8) est disposé sur la boîte de jonction (3) de telle sorte que la boîte de jonction (3) est essentiellement entièrement fermée.
